# EUROPEAN PATENT APPLICATION

(11) **EP 4 542 943 A1**
(43) Date of publication of application: **23.04.2025**
(21) Application number: 22946246.0
(22) Date of filing: 16.06.2022
(51) Int. Cl.: H04L 27/00

(54) **INFORMATION DETERMINATION METHOD, APPARATUS AND DEVICE, AND STORAGE MEDIUM**

(71) Applicant: Beijing Xiaomi Mobile Software Co., Ltd., Beijing 100085 (CN)
(72) Inventor: WU, Yumin, Beijing 100085 (CN); LI, Mingju, Beijing 100085 (CN)
(74) Representative: Stöckeler, Ferdinand
(86) International application number: PCT/CN2022/099239
(87) International publication number: WO 2023/240557

(57) **Abstract**

The present invention relates to the technical field of communications, and provides an information determination method, apparatus and device, and a storage medium. The method comprises: acquiring a configuration resource sent by a network device, wherein the configuration resource comprises at least one beam failure detection (BFD) detection resource set, and the BFD detection resource set comprises at least one BFD detection resource; and determining at least one of an initial activation state and an activation state update manner of the BFD detection resource. The method provided in the present invention allows a terminal device and a network device to use the same method to determine the initial activation state and/or the activation state update manner, so that the terminal device and the network device obtain the same determination result regarding the initial activation state and the activation state update manner, thereby ensuring that the terminal device and the network device have a consistent understanding of the activation state and activation manner of the BFD detection resource.

## Description

### FIELD

The present invention generally relates to the field of communication technology, and more particularly, to an information determination method/apparatus/device and a storage medium.

### BACKGROUND

In a 5G communication system, a network device usually configures, for a terminal device via a radio resource control (RRC) signaling, a beam failure detection (BFD) resource for a BFD. Also, the network device may also activate or deactivate the configured BFD resource via a medium access control control element (MAC CE) signaling, or the network device may directly activate or deactivate the BFD resource via the RRC signaling when configuring the BFD resource.

However, in the related art, the terminal device cannot determine a specific process based on which the network device activates or deactivates the BFD resource, resulting in the network device's and the terminal device's understandings of an activation state and an activation process of the BFD resource being inconsistent.

### SUMMARY

An information determination method/apparatus/device and a storage medium are provided in the present invention to ensure that an activation state and a used activation process of a beam failure detection resource is consistent for a network device and a terminal device.

In a first aspect, an embodiment of the present invention provides an information determination method, which is performed by a terminal device and includes: obtaining a configuration resource sent by a network device, in which the configuration resource includes at least one BFD resource; and determining at least one of an initial activation state or an activation state update mode of the BFD resource.

Optionally, in an embodiment of the present invention, the configuration resource includes at least one BFD resource set, and the BFD resource set includes at least one BFD resource.

Optionally, in an embodiment of the present invention, obtaining the configuration resource sent by the network device includes: obtaining the configuration resource sent by the network device via a first signaling.

Optionally, in an embodiment of the present invention, determining the initial activation state of the BFD resource includes: determining the initial activation state based on a number of BFD resources included in a BFD resource set.

Optionally, in an embodiment of the present invention, determining the initial activation state of the BFD resource includes: obtaining first indication information sent by the network device via a second signaling, in which the first indication information is used to indicate the initial activation state of the BFD resource; in which the first signaling and the second signaling are the same signaling or different signalings; and determining the initial activation state of the BFD resource based on the first indication information.

Optionally, in an embodiment of the present invention, a resource granularity indicated by the first indication information is one of: all BFD resource sets; a BFD resource group, in which the BFD resource group includes at least one BFD resource set; a BFD resource set; or a BFD resource.

Optionally, in an embodiment of the present invention, determining the activation state update mode of the BFD resource includes: obtaining second indication information sent by the network device via a third signaling, in which the second indication information is used to indicate whether to update an activation state via a media access control random access response (MAC CE) signaling; in which the first signaling and the third signaling are the same signaling or different signalings; and determining the activation state update mode of the BFD resource based on the third signaling.

Optionally, in an embodiment of the present invention, a resource granularity indicated by the second indication information is one of: all BFD resource sets; a BFD resource group, in which the BFD resource group includes at least one BFD resource set; a BFD resource set; or a BFD resource.

Optionally, in an embodiment of the present invention, determining the initial activation state of the BFD resource includes: determining the initial activation state of the BFD resource based on whether the terminal device supports activating or deactivating the BFD resource via an MAC CE signaling.

Optionally, in an embodiment of the present invention, determining the initial activation state of the BFD resource based on whether the terminal device supports the activating or deactivating the BFD resource via the MAC CE signaling includes: determining the initial activation state of the BFD resource based on whether the terminal device supports the activating or deactivating the BFD resource via the MAC CE signaling and whether the terminal device supports a configuration of a BFD resource set.

Optionally, in an embodiment of the present invention, determining the initial activation state of the BFD resource based on whether the terminal device supports the activating or deactivating the BFD resource via the MAC CE signaling includes: determining the initial activation state of the BFD resource based on whether the terminal device supports the activating or deactivating the BFD resource via the MAC CE signaling and a number of configured BFD resource sets supported.

Optionally, in an embodiment of the present invention, determining the initial activation state of the BFD resource based on whether the terminal device supports the activating or deactivating the BFD resource via the MAC CE signaling includes: determining the initial activation state based on a number of BFD resources included in a BFD resource set in response to the terminal device supporting the activating or deactivating the BFD resource via the MAC CE signaling and supporting a configuration of the BFD resource set.

Optionally, in an embodiment of the present invention, determining the initial activation state of the BFD resource based on whether the terminal device supports the activating or deactivating the BFD resource via the MAC CE signaling includes: determining the initial activation state based on a number of BFD resources included in a BFD resource set in response to the terminal device supporting the activating or deactivating the BFD resource via the MAC CE signaling and a number of configured BFD resource sets supported being greater than a first preset threshold value.

Optionally, in an embodiment of the present invention, determining the initial activation state of the BFD resource based on whether the terminal device supports the activating or deactivating the BFD resource via the MAC CE signaling includes: determining the initial activation state based on a number of configured BFD resource sets in response to the terminal device supporting the activating or deactivating the BFD resource via the MAC CE signaling and supporting a configuration of the BFD resource set.

Optionally, in an embodiment of the present invention, determining the initial activation state of the BFD resource based on whether the terminal device supports the activating or deactivating the BFD resource via the MAC CE signaling includes: determining the initial activation state of the BFD resource to be deactivated in response to the terminal device supporting the activating or deactivating the BFD resource via the MAC CE signaling.

Optionally, in an embodiment of the present invention, determining the initial activation state of the BFD resource based on whether the terminal device supports the activating or deactivating the BFD resource via the MAC CE signaling includes: determining the initial activation state of the BFD resource to be activated in response to the terminal device not supporting the activating or deactivating the BFD resource via the MAC CE signaling.

Optionally, in an embodiment of the present invention, determining the initial activation state of the BFD resource based on whether the terminal device supports the activating or deactivating the BFD resource via the MAC CE signaling includes: determining the initial activation state based on a number of BFD resources included in a BFD resource set in response to the terminal device supporting the activating or deactivating the BFD resource via the MAC CE signaling.

Optionally, in an embodiment of the present invention, determining the initial activation state of the BFD resource based on whether the terminal device supports the activating or deactivating the BFD resource via the MAC CE signaling includes: determining the initial activation state based on a number of configured BFD resource sets in response to the terminal device supporting the activating or deactivating the BFD resource via the MAC CE signaling.

Optionally, in an embodiment of the present invention, determining the initial activation state based on the number of configured BFD resource sets includes: determining the initial activation state of the BFD resource included in the BFD resource set to be activated in response to the number of configured BFD resource sets being less than or equal to a first preset threshold value; otherwise, determining the initial activation state of the BFD resource included in the BFD resource set to be deactivated.

Optionally, in an embodiment of the present invention, a process for determining the initial activation state based on the number of BFD resources included in the BFD resource set includes one of: determining an initial activation state of all BFD resources to be activated in response to a number of BFD resources included in any BFD resource set being less than or equal to a second preset threshold value; otherwise, determining an initial activation state of all BFD resources to be deactivated; determining an initial activation state of all BFD resources to be activated in response to a number of BFD resources included in each BFD resource set being less than or equal to a second preset threshold value; otherwise, determining an initial activation state of all BFD resources to be deactivated; determining an initial activation state of the BFD resource included in a corresponding BFD resource set to be activated in response to the number of BFD resources included in the corresponding BFD resource set being less than or equal to a second preset threshold value; otherwise, determining an initial activation state of the BFD resource included in a corresponding BFD resource set to be deactivated in response to the number of BFD resources included in the corresponding BFD resource set being greater than a second preset threshold value; or determining an initial activation state of all BFD resources to be activated in response to a total number of BFD resources being less than or equal to a second preset threshold value; otherwise, determining an initial activation state of all BFD resources to be deactivated.

Optionally, in an embodiment of the present invention, the method further includes: reporting to the network device an ability of the terminal device of whether to support activating or deactivating the BFD resource via the MAC CE signaling.

Optionally, in an embodiment of the present invention, determining the initial activation state of the BFD resource includes: determining at least one of the initial activation state or the activation state update mode of the BFD resource based on a protocol agreement.

Optionally, in an embodiment of the present invention, the method further includes: updating an activation state of the BFD resource based on the MAC CE signaling sent by the network device.

In the present invention, the information determination method is provided. The terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

In a second aspect, an embodiment of the present invention provides an information determination method, which is performed by a network device and includes: sending a configuration resource to a terminal device, in which the configuration resource includes at least one BFD resource; and determining at least one of an initial activation state or an activation state update mode of the BFD resource.

Optionally, in an embodiment of the present invention, the configuration resource includes at least one BFD resource set, and the BFD resource set includes at least one BFD resource.

Optionally, in an embodiment of the present invention, sending the configuration resource to the terminal device includes: sending the configuration resource to the terminal device via a first signaling.

Optionally, in an embodiment of the present invention, determining the initial activation state of the BFD resource includes: determining the initial activation state based on a number of BFD resources included in a BFD resource set.

Optionally, in an embodiment of the present invention, the method further includes: sending first indication information to the terminal device via a second signaling, in which the first indication information is used to indicate the initial activation state of the BFD resource; in which the first signaling and the second signaling are the same signaling or different signalings.

Optionally, in an embodiment of the present invention, a resource granularity indicated by the first indication information is one of: all BFD resource sets; a BFD resource group, in which the BFD resource group includes at least one BFD resource set; a BFD resource set; or a BFD resource.

Optionally, in an embodiment of the present invention, the method further includes: sending second indication information to the terminal device via a third signaling, in which the second indication information is used to indicate whether to update an activation state via an MAC CE signaling; in which the first signaling and the third signaling are the same signaling or different signalings.

Optionally, in an embodiment of the present invention, a resource granularity indicated by the second indication information is one of: all BFD resource sets; a BFD resource group, in which the BFD resource group includes at least one BFD resource set; a BFD resource set; or a BFD resource.

Optionally, in an embodiment of the present invention, the method further includes: determining whether the terminal device supports activating or deactivating the BFD resource via an MAC CE signaling based on a reporting of the terminal device.

Optionally, in an embodiment of the present invention, determining the initial activation state of the BFD resource based on whether the terminal device supports the activating or deactivating the BFD resource via the MAC CE signaling includes: determining the initial activation state of the BFD resource based on whether the terminal device supports the activating or deactivating the BFD resource via the MAC CE signaling and whether the terminal device supports a configuration of a BFD resource set reported by the terminal device.

Optionally, in an embodiment of the present invention, determining the initial activation state of the BFD resource based on whether the terminal device supports the activating or deactivating the BFD resource via the MAC CE signaling includes: determining the initial activation state of the BFD resource based on whether the terminal device supports the activating or deactivating the BFD resource via the MAC CE signaling reported by the terminal device and a number of configured BFD resource sets supported.

Optionally, in an embodiment of the present invention, determining the initial activation state of the BFD resource based on whether the terminal device supports the activating or deactivating the BFD resource via the MAC CE signaling includes: determining the initial activation state based on a number of BFD resources included in a BFD resource set in response to the terminal device reporting that the terminal device supports the activating or deactivating the BFD resource via the MAC CE signaling and supports a configuration of the BFD resource set.

Optionally, in an embodiment of the present invention, determining the initial activation state of the BFD resource based on whether the terminal device supports the activating or deactivating the BFD resource via the MAC CE signaling includes: determining the initial activation state based on a number of BFD resources included in a BFD resource set in response to the terminal device reporting that the terminal device supports the activating or deactivating the BFD resource via the MAC CE signaling and a number of configured BFD resource sets supported is greater than a first preset threshold value.

Optionally, in an embodiment of the present invention, determining the initial activation state of the BFD resource based on whether the terminal device supports the activating or deactivating the BFD resource via the MAC CE signaling includes: determining the initial activation state based on a number of configured BFD resource sets in response to the terminal device reporting that the terminal device supports the activating or deactivating the BFD resource via the MAC CE signaling and supports a configuration of the BFD resource set.

Optionally, in an embodiment of the present invention, determining the initial activation state of the BFD resource based on whether the terminal device supports the activating or deactivating the BFD resource via the MAC CE signaling includes: determining the initial activation state of the BFD resource to be deactivated in response to the terminal device reporting that the terminal device supports the activating or deactivating the BFD resource via the MAC CE signaling.

Optionally, in an embodiment of the present invention, determining the initial activation state of the BFD resource based on whether the terminal device supports the activating or deactivating the BFD resource via the MAC CE signaling includes: determining the initial activation state of the BFD resource to be activated in response to the terminal device reporting that the terminal device does not support the activating or deactivating the BFD resource via the MAC CE signaling.

Optionally, in an embodiment of the present invention, determining the initial activation state of the BFD resource based on whether the terminal device supports the activating or deactivating the BFD resource via the MAC CE signaling includes: determining the initial activation state based on a number of BFD resources included in a BFD resource set in response to the terminal device reporting that the terminal device supports the activating or deactivating the BFD resource via the MAC CE signaling.

Optionally, in an embodiment of the present invention, determining the initial activation state of the BFD resource based on whether the terminal device supports the activating or deactivating the BFD resource via the MAC CE signaling includes: determining the initial activation state based on a number of configured BFD resource sets in response to the terminal device reporting that the terminal device supports the activating or deactivating the BFD resource via the MAC CE signaling.

Optionally, in an embodiment of the present invention, determining the initial activation state based on the number of configured BFD resource sets includes: determining the initial activation state of the BFD resource included in the BFD resource set to be activated in response to the number of configured BFD resource sets being less than or equal to a first preset threshold value; otherwise, determining the initial activation state of the BFD resource included in the BFD resource set to be deactivated.

Optionally, in an embodiment of the present invention, a process for determining the initial activation state based on the number of BFD resources included in the BFD resource set includes one of: determining an initial activation state of all BFD resources to be activated in response to a number of BFD resources included in any BFD resource set being less than or equal to a second preset threshold value; otherwise, determining an initial activation state of all BFD resources to be deactivated; determining an initial activation state of all BFD resources to be activated in response to a number of BFD resources included in each BFD resource set being less than or equal to a second preset threshold value; otherwise, determining an initial activation state of all BFD resources to be deactivated; determining an initial activation state of the BFD resource included in a corresponding BFD resource set to be activated in response to the number of BFD resources included in the corresponding BFD resource set being less than or equal to a second preset threshold value; otherwise, determining an initial activation state of the BFD resource included in a corresponding BFD resource set to be deactivated in response to the number of BFD resources included in the corresponding BFD resource set being greater than a second preset threshold value; or determining an initial activation state of all BFD resources to be activated in response to a total number of BFD resources being less than or equal to a second preset threshold value; otherwise, determining an initial activation state of all BFD resources to be deactivated.

Optionally, in an embodiment of the present invention, determining the initial activation state of the BFD resource includes: determining at least one of the initial activation state or the activation state update mode of the BFD resource based on a protocol agreement.

Optionally, in an embodiment of the present invention, the method further includes: sending the MAC CE signaling to the terminal device to update an activation state of the BFD resource.

In a third aspect, an embodiment of the present invention provides an information determination apparatus, which includes: a transceiving module configured to obtain a configuration resource sent by a network device, in which the configuration resource includes at least one BFD resource set, and the BFD resource set includes at least one BFD resource; and a processing module configured to determine at least one of an initial activation state or an activation state update mode of the BFD resource.

In a fourth aspect, an embodiment of the present invention provides an information determination apparatus, which includes: a transceiving module configured to send a configuration resource to a terminal device, in which the configuration resource includes at least one beam failure detection (BFD) resource set, and the BFD resource set includes at least one BFD resource; and a processing module configured to determine at least one of an initial activation state or an activation state update mode of the BFD resource.

In a fifth aspect, an embodiment of the present invention provides a communication device, which includes a processor. When the processor invokes a computer program in a memory, the method according to the first aspect described above is implemented.

In a sixth aspect, an embodiment of the present invention provides a communication device, which includes a processor. When the processor invokes a computer program in a memory, the method according to the second aspect described above is implemented.

In a seventh aspect, an embodiment of the present invention provides a communication device, which includes a processor and a memory having stored therein a computer program. The processor is configured to execute the computer program stored in the memory, to cause the communication device to implement the method according to the first aspect described above.

In an eighth aspect, an embodiment of the present invention provides a communication device, which includes a processor and a memory having stored therein a computer program. The processor is configured to execute the computer program stored in the memory, to cause the communication device to implement the method according to the second aspect described above.

In a ninth aspect, an embodiment of the present invention provides a communication device, which includes a processor and an interface circuit. The interface circuit is configured to receive a code instruction and transmit the code instruction to the processor, and the processor is configured to run the code instruction to make the device implement the method according to the first aspect described above.

In a tenth aspect, an embodiment of the present invention provides a communication device, which includes a processor and an interface circuit. The interface circuit is configured to receive a code instruction and transmit the code instruction to the processor, and the processor is configured to run the code instruction to make the device implement the method according to the second aspect described above.

In an eleventh aspect, an embodiment of the present invention provides a communication system, which includes the communication apparatus according to the sixth aspect to the communication apparatus according to the tenth aspect, or the communication device according to the eleventh aspect to the communication device according to the fifteenth aspect, or the communication device according to the sixteenth aspect to the communication device according to the twentieth aspect, or the communication device according to the twenty-first aspect to the communication device according to the twenty-fifth aspect.

In a twelfth aspect, an embodiment of the present invention provides a computerreadable storage medium for storing instructions used by the above network device. The instructions, when executed, cause the terminal device to implement the method according to any one of the first aspect to the fifth aspect described above.

In a thirteenth aspect, an embodiment of the present invention provides a communication system, which includes the communication apparatus according to the third aspect to the communication apparatus according to the fourth aspect, or the communication device according to the fifth aspect to the communication device according to the sixth aspect, or the communication device according to the seventh aspect to the communication device according to the eighth aspect, or the communication device according to the ninth aspect to the communication device according to the tenth aspect.

In a fourteenth aspect, an embodiment of the present invention provides a computerreadable storage medium for storing instructions used by the above network device. The instructions, when executed, cause the terminal device to implement the method according to any one of the first aspect to the second aspect described above.

In a fifteenth aspect, the present invention further provides a computer program product, which includes a computer program that, when run on a computer, causes the computer to implement the method according to any one of the first aspect to the second aspect described above.

In a sixteenth aspect, the present invention provides a chip system, which includes at least one processor and an interface, for supporting a network device to implement functions involved in the method according to any one of the first aspect to the second aspect, for example, determining or processing at least one of data or information involved in the above method. In a possible design, the chip system further includes a memory for storing computer programs and data of the source secondary node. The chip system may consist of chips, or may include chips and other discrete devices.

In a seventeenth aspect, the present invention provides a computer program that, when run on a computer, causes the computer to implement the method according to any one of the first aspect to the second aspect described above.

### BRIEF DESCRIPTION OF THE DRAWINGS

The above and/or additional aspects and advantages of the present invention will become apparent and more readily appreciated from the following descriptions of embodiments made with reference to the drawings, in which:
FIG. 1 is a schematic diagram of an architecture of a communication system provided in an embodiment of the present invention;
FIG. 2 is a schematic flowchart of an information determination method provided in an embodiment of the present invention;
FIG. 3 is a schematic flowchart of an information determination method provided in another embodiment of the present invention;
FIG. 4 is a schematic flowchart of an information determination method provided in yet another embodiment of the present invention;
FIG. 5 is a schematic flowchart of an information determination method provided in a further embodiment of the present invention;
FIG. 6a is a schematic flowchart of an information determination method provided in a further embodiment of the present invention;
FIG. 6b is a schematic flowchart of an information determination method provided in a further embodiment of the present invention;
FIG. 7a is a schematic flowchart of an information determination method provided in a further embodiment of the present invention;
FIG. 7b is a schematic flowchart of an information determination method provided in a further embodiment of the present invention;
FIG. 7c is a schematic flowchart of an information determination method provided in a further embodiment of the present invention;
FIG. 7d is a schematic flowchart of an information determination method provided in a further embodiment of the present invention;
FIG. 7e is a schematic flowchart of an information determination method provided in a further embodiment of the present invention;
FIG. 7f is a schematic flowchart of an information determination method provided in a further embodiment of the present invention;
FIG. 7g is a schematic flowchart of an information determination method provided in a further embodiment of the present invention;
FIG. 7h is a schematic flowchart of an information determination method provided in a further embodiment of the present invention;
FIG. 7i is a schematic flowchart of an information determination method provided in a further embodiment of the present invention;
FIG. 8 is a schematic flowchart of an information determination method provided in a further embodiment of the present invention;
FIG. 9 is a schematic flowchart of an information determination method provided in a further embodiment of the present invention;
FIG. 10 is a schematic flowchart of an information determination method provided in a further embodiment of the present invention;
FIG. 11 is a schematic flowchart of an information determination method provided in a further embodiment of the present invention;
FIG. 12 is a schematic flowchart of an information determination method provided in a further embodiment of the present invention;
FIG. 13a is a schematic flowchart of an information determination method provided in a further embodiment of the present invention;
FIG. 13b is a schematic flowchart of an information determination method provided in a further embodiment of the present invention;
FIG. 14a is a schematic flowchart of an information determination method provided in a further embodiment of the present invention;
FIG. 14b is a schematic flowchart of an information determination method provided in a further embodiment of the present invention;
FIG. 14c is a schematic flowchart of an information determination method provided in a further embodiment of the present invention;
FIG. 14d is a schematic flowchart of an information determination method provided in a further embodiment of the present invention;
FIG. 14e is a schematic flowchart of an information determination method provided in a further embodiment of the present invention;
FIG. 14f is a schematic flowchart of an information determination method provided in a further embodiment of the present invention;
FIG. 14g is a schematic flowchart of an information determination method provided in a further embodiment of the present invention;
FIG. 14h is a schematic flowchart of an information determination method provided in a further embodiment of the present invention;
FIG. 14i is a schematic flowchart of an information determination method provided in a further embodiment of the present invention;
FIG. 15 is a schematic block diagram of an information determination apparatus provided in an embodiment of the present invention;
FIG. 16 is a schematic block diagram of an information determination apparatus provided in another embodiment of the present invention;
FIG. 17 is a block diagram of a terminal device provided in an embodiment of the present invention; and
FIG. 18 is a block diagram of a network-side device provided in an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the embodiments of the present invention. Instead, they are merely examples of devices and methods consistent with some aspects of embodiments of the present invention as recited in the appended claims.

Terms used herein in the embodiments of the present invention are only for the purpose of describing specific embodiments, but should not be construed to limit the embodiments of the present invention. As used in the embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of the embodiments of the present invention. As used herein, the term "if" may be construed to mean "when" or "upon" or "in response to determining" depending on the context.

In order to better understand an information determination method disclosed in embodiments of the present invention, a communication system to which embodiments of the present invention are applicable is first described below.

For ease of understanding, terms involved in the present invention are first introduced.

### 1. Beam Failure Detection (BFD)

The BFD is used to detect whether a sending beam and a receiving beam are misaligned. If they are misaligned, a signal quality will be severely degraded.

### 2. Ratio Resource Control (RRC) signaling

The RRC signaling may provide a parameter configuration function for an underlying protocol entity of an access network, and is responsible for measurement, control and other functions related to a terminal device mobility management.

### 3. Medium Access Control Control Element (MAC CE) signaling

The MAC CE is a way for a terminal device and a network device to exchange control information, and what is exchanged is control information about the MAC layer.

### 4. Synchronization Signal and Physical Broadcast Channel (PBCH) block (SSB).

The SSB consists of three parts: a primary synchronization signal, a secondary synchronization signal and a physical broadcast channel block. The SSB occupies a total of 4 symbols in a time domain and a total of 240 subcarriers in a frequency domain.

### 5. Channel State Information-Reference Signal (CSI-RS)

The CSI-RS may be used for an interference transmission, a multi-point measurement, a beam management, a mobility management, etc.

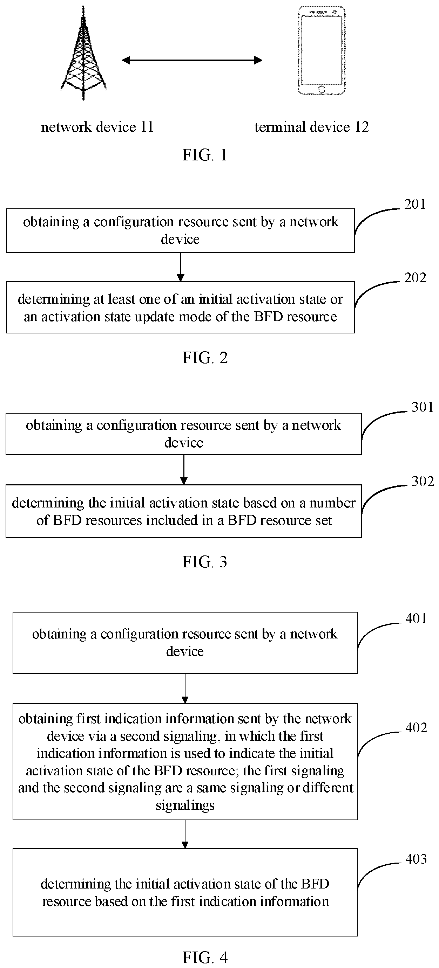

FIG. 1 is a schematic diagram of an architecture of a communication system provided in an embodiment of the present invention. Referring to FIG. 1, the communication system may include, but is not limited to, one network device and one terminal device. The number and forms of the devices shown in FIG. 1 are only as an example and do not constitute a limitation on the embodiments of the present invention. The communication system may include two or more network devices and two or more terminal devices in practical applications. As an example for illustration, the communication system shown in FIG. 1 includes one network device 11 and one terminal device 12.

It should be noted that the technical solutions of the embodiments of the present invention may be applied to various communication systems, for example, a long term evolution (LTE) system, a 5th generation (5G) mobile communication system, a 5G new radio (NR) system, or other future new mobile communication systems.

The network device 11 in the embodiments of the present invention is an entity on a network side for sending or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (Wi-Fi) system. The specific technology and specific device form adopted by the network device are not limited in the embodiments of the present invention. The network device provided by embodiments of the present invention may be composed of a central unit (CU) and distributed units (DU). The CU may also be called a control unit. Using the CU-DU structure allows to split a protocol layer of the network device, such as the base station, so that some of functions of the protocol layer is centrally controlled in the CU, some or all of the remaining functions of the protocol layer are distributed in the DUs, and the CU centrally controls the DUs.

The terminal device 12 in the embodiments of the present invention is an entity on a user side for receiving or sending signals, such as a mobile phone. The terminal device may also be called a terminal, a user equipment (UE), a mobile station (MS), a mobile terminal (MT), and so on. The terminal device may be a device with a communication function, such as a car, a smart car, a mobile phone, a wearable device, a tablet Pad, a computer with a wireless transceiving function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, a wireless terminal device in a smart home, etc. The specific technology and the specific device form adopted by the terminal device are not limited in the embodiments of the present invention.

It can be understood that the communication system described in embodiments of the present invention is intended to illustrate the technical solutions of the embodiments of the present invention more clearly, and does not constitute a limitation on the technical solutions provided by the embodiments of the present invention. Those of ordinary skill in the art will know that with an evolution of a system architecture and an emergence of a new service scenario, the technical solutions provided by the embodiments of the present invention are also applicable to similar technical problems.

Embodiments of the present invention will be described in detail below, and examples of embodiments are illustrated in the drawings. The same or similar elements are denoted by like reference numerals throughout the descriptions. Embodiments described herein with reference to drawings are explanatory, serve to explain the present invention, and cannot be construed to limit the embodiments of the present invention.

FIG. 2 is a schematic flowchart of an information determination method provided in an embodiment of the present invention, which is performed by a terminal device. As shown in FIG. 2, the information determination method may include the following steps.

In step 201, a configuration resource sent by a network device is obtained.

In an embodiment of the present invention, the configuration resource may include at least one BFD resource set, and the BFD resource set may include at least one BFD resource.

Further, in an embodiment of the present invention, the configuration resource may directly include at least one BFD resource. Specifically, when the terminal device does not support a configuration of the BFD resource set, the network device may not configure the BFD resource set for the terminal device, but directly configure the BFD resource for the terminal device.

Furthermore, in an embodiment of the present invention, the above configuration resource may be a resource configured for a certain terminal device for use when performing a BFD, or may be a resource configured for a specified cell group for use when performing a BFD, or may be a resource configured for a specified cell for use when performing a BFD, or may be a resource configured for a specified bandwidth part (BWP) of a specified cell for use when performing a BFD.

Further, in an embodiment of the present invention, the BFD resource may include a corresponding reference signal, for example, the reference signal may be an SSB and/or a CSI-RS.

Furthermore, in an embodiment of the present invention, the above configuration resource may be sent by the network device via a first signaling. The first signaling may be an RRC signaling.

In step 202, at least one of an initial activation state or an activation state update mode of the BFD resource is determined.

In an embodiment of the present invention, the terminal device may determine the initial activation state and/or the activation state update mode of the BFD resource based on a number of BFD resources, a signaling indication of the network device, and an ability of the terminal device in whether supporting activating or deactivating the BFD resource via an MAC CE signaling. Also, the details of this part will be described in the subsequent embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 3 is a schematic flowchart of an information determination method provided in an embodiment of the present invention, which is performed by a terminal device. As shown in FIG. 3, the information determination method may include the following steps.

In step 301, a configuration resource sent by a network device is obtained.

For the relevant introduction of the step 301, reference may be made to the descriptions of the above embodiments, and details are not described herein again in the embodiments of the present invention.

In step 302, the initial activation state is determined based on a number of BFD resources included in a BFD resource set.

In an embodiment of the present invention, a process for determining the initial activation state based on the number of BFD resources included in the BFD resource set may include one of the following processes.

In process 1, an initial activation state of all BFD resources is determined to be activated (i.e., all BFD resources are determined to be activated) in response to a number of BFD resources included in any BFD resource set being less than or equal to a second preset threshold value; otherwise, an initial activation state of all BFD resources is determined to be deactivated (i.e., all BFD resources are determined to be deactivated).

In an embodiment of the present invention, the second preset threshold value may be based on a protocol agreement, or may be configured by the network device to the terminal device. Also, the second preset threshold value may specifically be: a maximum number of "BFD resources" supported by the terminal device for directly activating via an RRC signaling (for example, the second preset threshold value may be 2). Based on this, since the BFD resource included in the configuration resource in the step 301 is configured by the network device via the RRC signaling, when the number of BFD resources is less than or equal to the second preset threshold value, it means that the terminal device supports directly activating the BFD resource configured by the network device via the RRC signaling, and the initial activation state of all BFD resources may be directly determined to be activated. Also, when the number of BFD resources is greater than the second preset threshold value, it means that the terminal device does not support directly activating the BFD resource configured by the network device via the RRC signaling, and therefore, the initial activation state of all BFD resources may be directly determined to be deactivated.

Illustratively, in an embodiment of the present invention, it is assumed that the second preset threshold value is 2, and the configuration resource sent by the network device to the terminal device includes 2 BFD resource sets, namely, BFD resource set-1 and BFD resource set-2. If the number of BFD resources included in any BFD resource set of BFD resource set-1 and BFD resource set-2 is less than or equal to 2, it may be determined that the initial activation state of all BFD resources (that is, all BFD resources in BFD resource set-1 and BFD resource set-2) is activated; otherwise, it is determined that the initial activation state of all BFD resources is deactivated.

In process 2, an initial activation state of all BFD resources is determined to be activated in response to a number of BFD resources included in each BFD resource set being less than or equal to a second preset threshold value; otherwise, an initial activation state of all BFD resources is determined to be deactivated.

Illustratively, in an embodiment of the present invention, it is assumed that the second preset threshold value is 2, and the configuration resource sent by the network device to the terminal device includes 2 BFD resource sets, namely, BFD resource set-1 and BFD resource set-2. Only when the number of BFD resources in BFD resource set-1 and the number of BFD resources in BFD resource set-2 are both less than or equal to 2, it is determined that the initial activation states of the BFD resources in all BFD resource sets are activated. Also, if the number of BFD resources included in any BFD resource set of BFD resource set-1 and BFD resource set-2 is greater than 2, it is determined that the initial activation state of all BFD resources is deactivated.

In process 3, an initial activation state of the BFD resource included in a corresponding BFD resource set is determined to be activated in response to the number of BFD resources included in the corresponding BFD resource set being less than or equal to a second preset threshold value; otherwise, an initial activation state of the BFD resource included in a corresponding BFD resource set is determined to be deactivated in response to the number of BFD resources included in the corresponding BFD resource set being greater than a second preset threshold value.

Illustratively, in an embodiment of the present invention, it is assumed that the second preset threshold value is 2, and the configuration resource sent by the network device to the terminal device is 2 BFD resource sets, namely, BFD resource set-1 and BFD resource set-2. The number of BFD resources in BFD resource set-1 is 1, and the number of BFD resources in BFD resource set-2 is 6. In this case, the number of BFD resources in BFD resource set-1 is less than the second preset threshold value, and it is determined that the initial activation state of the BFD resource in BFD resource set-1 is activated. Further, when the number of BFD resources in BFD resource set-2 is greater than the second preset threshold value, it is determined that the initial activation state of the BFD resource in BFD resource set-2 is deactivated.

In process 4, an initial activation state of all BFD resources is determined to be activated in response to a total number of BFD resources being less than or equal to a second preset threshold value; otherwise, an initial activation state of all BFD resources is determined to be deactivated.

Illustratively, in an embodiment of the present invention, it is assumed that the second preset threshold value is 2, and the configuration resource sent by the network device to the terminal device is 2 BFD resource sets, namely, BFD resource set-1 and BFD resource set-2. The number of BFD resources in BFD resource set-1 is 3, and the number of BFD resources in BFD resource set-2 is 4. In this case, the total number of BFD resources in the BFD resource set is greater than the second preset threshold value, it may be determined that the initial activation state of all BFD resources is deactivated.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 4 is a schematic flowchart of an information determination method provided in an embodiment of the present invention, which is performed by a terminal device. As shown in FIG. 4, the information determination method may include the following steps.

In step 401, a configuration resource sent by a network device is obtained.

In an embodiment of the present invention, the above configuration resource may be sent by the network device via a first signaling. The first signaling may be an RRC signaling.

For the relevant introduction of the step 401, reference may be made to the descriptions of the above embodiments, and details are not described herein again in the embodiments of the present invention.

In step 402, first indication information sent by the network device via a second signaling is obtained. The first indication information may be used to indicate the initial activation state of the BFD resource.

The first signaling and the second signaling are the same signaling or different signalings.

Further, in an embodiment of the present invention, the first indication information may indicate the initial activation state of the BFD resource based on different granularities.

Specifically, in an embodiment of the present invention, a resource granularity indicated by the first indication information may be: all BFD resource sets. That is, the first indication information may be used to uniformly indicate the initial activation state for all BFD resource sets.

Illustratively, in an embodiment of the present invention, it is assumed that the configuration resource sent by the network device to the terminal device includes 2 BFD resource sets, namely, BFD resource set-1 and BFD resource set-2. The number of BFD resources included in BFD resource set-1 and the number of BFD resources included in BFD resource set-2 are both 4. When the first indication information is used to uniformly indicate the initial activation state for all BFD resource sets, the first indication information may only indicate activated or deactivated. When the first indication information indicates activated, it means that the first indication information indicates that the initial activation state of all BFD resources (i.e., 8 BFD resources) is activated.

Further, in another embodiment of the present invention, a resource granularity indicated by the first indication information may be a BFD resource group, and the BFD resource group may include at least one BFD resource set. Further, the first indication information may be used to respectively indicate the initial activation states of the BFD resources in different resource groups.

Illustratively, in an embodiment of the present invention, it is assumed that the configuration resource sent by the network device to the terminal device includes 3 BFD resource sets, namely, BFD resource set-1, BFD resource set-2, and BFD resource set-3. BFD resource set-1 and BFD resource set-2 are classified into resource group-1, and BFD resource set-3 is classified into resource group-2. When the first indication information is used to respectively indicate the initial activation states of the BFD resources in different resource groups with the resource group as the granularity, the first indication information may indicate the initial activation state of resource group-1 and the initial activation state of resource group-2 respectively. When the first indication information indicates that resource group-1 is activated and indicates that resource group-2 is deactivated, it means that the first indication information indicates that the initial activation state of all BFD resources included in resource group-1 is activated, and the first indication information indicates that the initial activation state of all BFD resources included in resource group-2 is deactivated.

Further, in another embodiment of the present invention, a resource granularity indicated by the first indication information may be a BFD resource set. That is, the first indication information may also be used to respectively indicate the initial activation states of the BFD resources in different BFD resource sets.

Illustratively, in an embodiment of the present invention, it is assumed that the configuration resource sent by the network device to the terminal device includes 2 BFD resource sets, namely, BFD resource set-1 and BFD resource set-2. When the first indication information is used to respectively indicate the initial activation states of the BFD resources in different BFD resource sets with the BFD resource set as the granularity, the first indication information may respectively indicate the initial activation state of BFD resource set-1 and the initial activation state of BFD resource set-2. When the first indication information indicates that BFD resource set-1 is activated and indicates that BFD resource set-2 is deactivated, it means that the first indication information indicates that the initial activation state of all BFD resources included in BFD resource set-1 is activated, and the first indication information indicates that the initial activation state of all BFD resources included in BFD resource set-2 is deactivated.

Further, in another embodiment of the present invention, a resource granularity indicated by the first indication information may be a BFD resource. That is, the first indication information is used to respectively indicate the initial activation states corresponding to different BFD resources.

Illustratively, in an embodiment of the present invention, it is assumed that the configuration resource sent by the network device to the terminal device only includes BFD resource set-1, and BFD resource set-1 includes BFD resource-1, BFD resource-2, and BFD resource-3. When the first indication information is used to respectively indicate the initial activation states corresponding to different BFD resources with the BFD resource as the granularity, the first indication information may respectively indicate the initial activation states of BFD resource-1, BFD resource-2, and BFD resource-3. When the first indication information indicates that BFD resource-1 is activated, BFD resource-2 is activated, and BFD resource-3 is deactivated, it means that the first indication information indicates that the initial activation state corresponding to BFD resource-1 is activated, the initial activation state corresponding to BFD resource-2 is activated, and the initial activation state corresponding to BFD resource-3 is deactivated.

In step 403, the initial activation state of the BFD resource is determined based on the first indication information.

It should be noted that, in an embodiment of the present invention, when the indication granularity of the first indication information in the above step 402 changes, a method for determining the initial activation state of the BFD resource based on the first indication information in this step will also change.

Specifically, in an embodiment of the present invention, when the first indication information in the above step 402 is used to uniformly indicate the initial activation state for all BFD resource sets, determining the initial activation state of the BFD resource based on the first indication information may include: setting the initial activation states of the BFD resources in all BFD resource sets to be activated in response to the initial activation state indicated by the first indication information being activated; setting the initial activation states of the BFD resources in all BFD resource sets to be deactivated in response to the initial activation state indicated by the first indication information being deactivated.

Illustratively, in an embodiment of the present invention, it is assumed that the configuration resource sent by the network device to the terminal device includes 2 BFD resource sets, namely, BFD resource set-1 and BFD resource set-2. If the number of BFD resources included in BFD resource set-1 and the number of BFD resources included in BFD resource set-2 are both 4, and when the first indication information is used to uniformly indicate the initial activation state for all BFD resource sets, the initial activation state of all BFD resources is set to be activated in response to the initial activation state indicated by the first indication information being activated.

Further, in an embodiment of the present invention, when the first indication information in the above step 402 is used to respectively indicate the initial activation states of the BFD resources in different resource groups with the resource group as the granularity, determining the initial activation state of the BFD resource based on the first indication information may further include: setting an initial activation state of BFD resource(s) in a corresponding resource group to be activated in response to the first indication information indicating that the initial activation state of the corresponding resource group is activated; setting an initial activation state of BFD resource(s) in a corresponding resource group to be deactivated in response to the first indication information indicating that the initial activation state of the corresponding resource group is deactivated.

Illustratively, in an embodiment of the present invention, it is assumed that the configuration resource sent by the network device to the terminal device includes 3 BFD resource sets, namely, BFD resource set-1, BFD resource set-2, and BFD resource set-3. BFD resource set-1 and BFD resource set-2 may be classified into resource group-1, and BFD resource set-3 may be classified into resource group-2. The initial activation state of all BFD resources included in BFD resource set-1 and BFD resource set-2 in resource group-1 is set to be activated, and the initial activation state of all BFD resources in BFD resource set-3 in resource group-2 is set to be deactivated, in response to the first indication information indicating activated for resource group-1 and deactivated for resource group-2.

Further, in an embodiment of the present invention, when the first indication information in the above step 402 is used to respectively indicate the initial activation states of the BFD resources in different BFD resource sets with the BFD resource set as the granularity, determining the initial activation state of the BFD resource based on the first indication information may further include: setting an initial activation state of BFD resource(s) in a corresponding BFD resource set to be activated in response to the first indication information indicating that the initial activation state of the BFD resource set is activated; setting an initial activation state of BFD resource(s) in a corresponding BFD resource set to be deactivated in response to the first indication information indicating that the initial activation state of the BFD resource set is deactivated.

Illustratively, in an embodiment of the present invention, it is assumed that the configuration resource sent by the network device to the terminal device includes 2 BFD resource sets, namely, BFD resource set-1 and BFD resource set-2, in response to the first indication information indicating activated for BFD resource set-1 and deactivated for BFD resource set-2, the initial activation state of all BFD resources in BFD resource set-1 is set to be activated, and the initial activation state of all BFD resources in BFD resource set-2 is set to be deactivated.

Further, in an embodiment of the present invention, when the first indication information in the above step 402 is used to respectively indicate the initial activation states corresponding to different BFD resources with the BFD resource as the granularity, determining the initial activation state of the BFD resource based on the first indication information includes: setting an initial activation state of a corresponding BFD resource to be activated in response to the first indication information indicating that the initial activation state of the corresponding BFD resource is activated; setting an initial activation state of a corresponding BFD resource to be deactivated in response to the first indication information indicating that the initial activation state of the corresponding BFD resource is deactivated.

Illustratively, in an embodiment of the present invention, it is assumed that the configuration resource sent by the network device to the terminal device includes 1 BFD resource set, namely BFD resource set-1, and BFD resource set-1 includes BFD resource-1, BFD resource-2, and BFD resource-3. The initial activation states of BFD resource-1 and BFD resource-2 are set to be activated, and the initial activation state of BFD resource-3 is set to be deactivated, in response to the first indication information indicating activated for BFD resource-1, activated for BFD resource-2, and deactivated for BFD resource-3.

To sum up, in the information determination method provided in embodiments of the present invention, the terminal device first obtains the configuration resource sent by the network device, in which the configuration resource includes at least one BFD resource, and determines at least one of the initial activation state or the activation state update mode of the BFD resource. It may be seen that, in embodiments of the present invention, the terminal device may first be aware of resources included in the network device via the configuration resource, and determines at least one of the initial activation state or the activation state update mode of the BFD resource through multiple processes. Illustratively, at least one of the initial activation state or the activation state update mode of the BFD resource may be determined by processes, such as determining the initial activation state by the number of configuration resources or determining the activation state update mode by transmitting a configuration resource signaling. In addition, in embodiments of the present invention, after the terminal device obtains the configuration resource sent by the network device, the terminal device may determine the initial activation state of the BFD resource based on the terminal device ability. In order to ensure that the network device is aware of the initial activation state and/or used activation mode of the BFD resource determined based on the terminal device ability, the terminal device may report its own ability to the network device to ensure that the network device and the terminal device keep a consistent understanding.

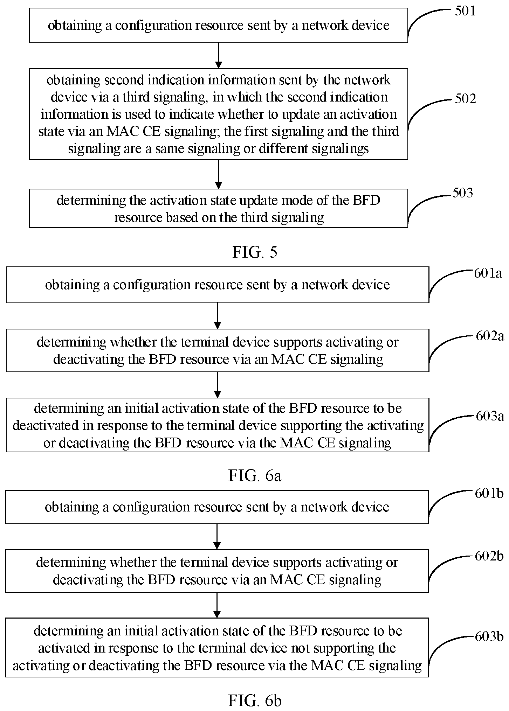

FIG. 5 is a schematic flowchart of an information determination method provided in an embodiment of the present invention, which is performed by a terminal device. As shown in FIG. 5, the information determination method may include the following steps.

In step 501, a configuration resource sent by a network device is obtained.

In an embodiment of the present invention, the above configuration resource may be sent by the network device via a first signaling. The first signaling may be an RRC signaling.

In step 502, second indication information sent by the network device via a third signaling is obtained. The second indication information is used to indicate whether to update an activation state via an MAC CE signaling.

The first signaling and the third signaling are the same signaling or different signalings.

Further, in an embodiment of the present invention, the second indication information may indicate, based on different granularities, whether the activation state of the BFD resource is updated via the MAC CE signaling.

Specifically, in an embodiment of the present invention, a resource granularity indicated by the second indication information may be all BFD resource sets. That is, the second indication information may be used to uniformly indicate whether to update the activation state via the MAC CE signaling for all BFD resource sets.

Illustratively, in an embodiment of the present invention, it is assumed that the configuration resource sent by the network device to the terminal device includes 2 BFD resource sets, namely, BFD resource set-1 and BFD resource set-2. If the number of BFD resources included in BFD resource set-1 and the number of BFD resources included in BFD resource set-2 are both 4, the second indication information may only indicate whether to update the activation state via the MAC CE signaling when the second indication information is used to uniformly indicate whether to update the activation state via the MAC CE signaling for all BFD resource sets. When the second indication information indicates to update the activation state via the MAC CE signaling, it means that the second indication information indicates that the activation state of all BFD resources is updated via the MAC CE signaling.

Further, in an embodiment of the present invention, a resource granularity indicated by the second indication information may be a BFD resource group, and the BFD resource group may include at least one BFD resource set. Further, the second indication information may also be used to respectively indicate whether the activation states of different resource groups are updated via the MAC CE signaling.

Illustratively, in an embodiment of the present invention, it is assumed that the configuration resource sent by the network device to the terminal device includes 3 BFD resource sets, namely, BFD resource set-1, BFD resource set-2, and BFD resource set-3. BFD resource set-1 and BFD resource set-2 may be classified into resource group-1, and BFD resource set-3 may be classified into resource group-2. When the second indication information is used to respectively indicate whether the activation states of different resource groups are updated via the MAC CE signaling with the resource group as the granularity, the second indication information may respectively indicate whether the activation states of resource group-1 and resource group-2 are updated via the MAC CE signaling. When the second indication information indicates that the activation state of resource group-1 is updated via the MAC CE signaling and indicates that the activation state of resource group-2 is not updated via the MAC CE signaling, it means that the second indication information indicates that the activation states of all BFD resources in resource group-1 are updated via the MAC CE signaling, and the second indication information indicates that the activation states of all BFD resources in resource group-2 are not updated via the MAC CE signaling.

Further, in an embodiment of the present invention, a resource granularity indicated by the second indication information may be a BFD resource set. That is, the second indication information may also be used to respectively indicate whether the activation states of different BFD resource sets are updated via the MAC CE signaling.

Illustratively, in an embodiment of the present invention, it is assumed that the configuration resource sent by the network device to the terminal device includes 2 BFD resource sets, namely, BFD resource set-1 and BFD resource set-2. When the second indication information is used to respectively indicate whether the activation states of different BFD resource sets are updated via the MAC CE signaling with the BFD resource set as the granularity, the second indication information may respectively indicate whether the activation states of BFD resource set-1 and BFD resource set-2 are updated via the MAC CE signaling. When the second indication information indicates that the activation state of BFD resource set-1 is updated via the MAC CE signaling and the activation state of BFD resource set-2 is not updated via the MAC CE signaling, it means that the second indication information indicates that the activation states of all BFD resources included in BFD resource set-1 are updated via the MAC CE signaling, and the second indication information indicates that the activation states of all BFD resources included in BFD resource set-2 are not updated via the MAC CE signaling.

Further, in an embodiment of the present invention, a resource granularity indicated by the second indication information may be a BFD resource. That is, the second indication information may also be used to respectively indicate whether the activation states of different BFD resources are updated via the MAC CE signaling.

Illustratively, in an embodiment of the present invention, it is assumed that the configuration resource sent by the network device to the terminal device includes 1 BFD resource set as BFD resource set-1, and BFD resource set-1 includes BFD resource-1, BFD resource-2, and BFD resource-3. When the second indication information is used to respectively indicate whether the activation states of different BFD resources are updated via the MAC CE signaling with the BFD resource as the granularity, the second indication information may respectively indicate whether the activation states of BFD resource-1, BFD resource-2, and BFD resource-3 are updated via the MAC CE signaling. When the second indication information indicates that the activation state of BFD resource-1 is updated via the MAC CE signaling, indicates that the activation state of BFD resource-2 is updated via the MAC CE signaling, but the activation state of BFD resource-3 is not updated via the MAC CE signaling, it means that the second indication information indicates that the activation states of BFD resource-1 and BFD resource-2 are updated via the MAC CE signaling, and the second indication information indicates that the activation state of BFD resource-3 is not updated via the MAC CE signaling.

In step 503, the activation state update mode of the BFD resource is determined based on the third signaling.

It should be noted that, in an embodiment of the present invention, when the indication granularity of the second indication information in the above step 502 changes, a method for determining the activation state update mode of the BFD resource based on the second indication information in this step will also change.

In an embodiment of the present invention, when the second indication information in the above step 502 is used to uniformly indicate whether to update the activation state via the MAC CE signaling for all BFD resource sets, determining the activation state update mode of the BFD resource based on the third signaling may include: determining that the activation state update mode of all BFD resources is updating the activation state via the MAC CE signaling in response to the second indication information indicating that the activation state is updated via the MAC CE signaling.

Illustratively, in an embodiment of the present invention, it is assumed that the configuration resource sent by the network device to the terminal device includes 2 BFD resource sets, namely, BFD resource set-1 and BFD resource set-2. If the number of BFD resources included in BFD resource set-1 and the number of BFD resources included in BFD resource set-2 are both 4, and when the second indication information is used to uniformly indicate whether to update the activation state via the MAC CE signaling for all BFD resource sets, it is determined that the activation state of all BFD resources needs to be updated via the MAC CE signaling in response to the second indication information indicating that the activation state is updated via the MAC CE signaling.

Further, in an embodiment of the present invention, when the second indication information in the above step 502 is used to respectively indicate whether the activation states of different resource groups are updated via the MAC CE signaling with the resource group as the granularity, determining the activation state update mode of the BFD resource based on the third signaling may further include: determining that an activation state update mode of a corresponding resource group is updating the activation state via the MAC CE signaling in response to the second indication information indicating that the activation state of the resource group needs to be updated via the MAC CE signaling.

Illustratively, in an embodiment of the present invention, it is assumed that the configuration resource sent by the network device to the terminal device includes 3 BFD resource sets, namely, BFD resource set-1, BFD resource set-2, and BFD resource set-3. BFD resource set-1 and BFD resource set-2 may be classified to resource group-1, and BFD resource set-3 may be classified to resource group-2. The second indication information is used to respectively indicate whether the activation states of different resource groups are updated via the MAC CE signaling with the resource group as the granularity. It is determined that the activation states of all BFD resources in resource group-1 are updated via the MAC CE signaling, and the activation states of all BFD resources in resource group-2 are not updated via the MAC CE signaling in response to the second indication information indicating that the activation state of resource group-1 is updated via the MAC CE signaling and the activation state of resource group-2 is not updated via the MAC CE signaling.

Further, in another embodiment of the present invention, when the second indication information in the above step 502 is used to respectively indicate whether the activation states of different BFD resource sets are updated via the MAC CE signaling with the BFD resource set as the granularity, determining the activation state update mode of the BFD resource based on the third signaling includes: determining that an activation state update mode of a corresponding BFD resource set is updating the activation state via the MAC CE signaling in response to the second indication information indicating that the activation state of the BFD resource set needs to be updated via the MAC CE signaling.

Illustratively, in an embodiment of the present invention, it is assumed that the configuration resource sent by the network device to the terminal device includes 2 BFD resource sets, namely, BFD resource set-1 and BFD resource set-2, and when the second indication information is used to respectively indicate whether the activation states of different BFD resource sets are updated via the MAC CE signaling with the BFD resource set as the granularity, it is determined that the activation states of the BFD resources in BFD resource set-1 are updated via the MAC CE signaling and the activation states of the BFD resources in BFD resource set-2 are not updated via the MAC CE signaling in response to the second indication information indicating that the activation state of BFD resource set-1 is updated via the MAC CE signaling and the activation state of BFD resource set-2 is not updated via the MAC CE signaling.

Further, in another embodiment of the present invention, when the second indication information in the above step 502 is used to respectively indicate whether the activation states of different BFD resources are updated via the MAC CE signaling with the BFD resource as the granularity, determining the activation state update mode of the BFD resource based on the third signaling includes: determining that an activation state update mode of a corresponding BFD resource is updating the activation state via the MAC CE signaling in response to the second indication information indicating that the activation state of the BFD resource needs to be updated via the MAC CE signaling.

Illustratively, in an embodiment of the present invention, it is assumed that the configuration resource sent by the network device to the terminal device includes 1 BFD resource set, namely BFD resource set-1, and BFD resource set-1 includes BFD resource-1, BFD resource-2, and BFD resource-3. When the second indication information is used to respectively indicate whether the activation states of different BFD resources are updated via the MAC CE signaling with the BFD resource as the granularity, it is determined that the activation states of BFD resource-1 and BFD resource-2 are updated via the MAC CE signaling and the activation state of BFD resource-3 is not updated via the MAC CE signaling in response to the second indication information respectively indicating that the activation state of BFD resource-1 is updated via the MAC CE signaling, the activation state of BFD resource-2 is updated via the MAC CE signaling, and the activation state of BFD resource-3 is not updated via the MAC CE signaling.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 6a is a schematic flowchart of an information determination method provided in an embodiment of the present invention, which is performed by a terminal device. As shown in FIG. 6a, the information determination method may include the following steps.

In step 601a, a configuration resource sent by a network device is obtained.

In an embodiment of the present invention, the configuration resource includes at least one BFD resource set, and the BFD resource set includes at least one BFD resource.

In step 602a, it is determined whether the terminal device supports activating or deactivating the BFD resource via an MAC CE signaling.

In step 603a, an initial activation state of the BFD resource is determined to be deactivated in response to the terminal device supporting the activating or deactivating the BFD resource via the MAC CE signaling.

In an embodiment of the present invention, when the terminal device supports the activating or deactivating the BFD resource via the MAC CE signaling, and when the terminal device obtains the BFD resource configured by the network device, the initial activation state of the BFD resource may be directly determined to be deactivated. Further, when the terminal device needs to detect a certain BFD resource in a subsequent procedure, the network device may activate a to-bedetected BFD resource via the MAC CE signaling, thereby ensuring completion of the BFD process. Further, in this embodiment, the BFD resource is activated only when it is needed to be detected, thereby saving the resources.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 6b is a schematic flowchart of an information determination method provided in an embodiment of the present invention, which is performed by a terminal device. As shown in FIG. 6b, the information determination method may include the following steps.

In step 601b, a configuration resource sent by a network device is obtained.

In an embodiment of the present invention, the configuration resource includes at least one BFD resource set, and the BFD resource set includes at least one BFD resource.

In step 602b, it is determined whether the terminal device supports activating or deactivating the BFD resource via an MAC CE signaling.

For the relevant introduction of the step 602b, reference may be made to the descriptions of the above embodiments.

In step 603b, an initial activation state of the BFD resource is determined to be activated in response to the terminal device not supporting the activating or deactivating the BFD resource via the MAC CE signaling.

In an embodiment of the present invention, when the terminal device does not support the activating or deactivating the BFD resource via the MAC CE signaling, the terminal device cannot activate or deactivate the BFD resource via the MAC CE signaling sent by the network device. Therefore, when the terminal device obtains the BFD resource configured by the network device, the initial activation state of the BFD resource may be directly determined to be activated. When a certain BFD resource needs to be detected subsequently, since the initial activation state of all BFD resources is activated, the BFD resource to be detected may be directly detected, thereby ensuring completion of the BFD process.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

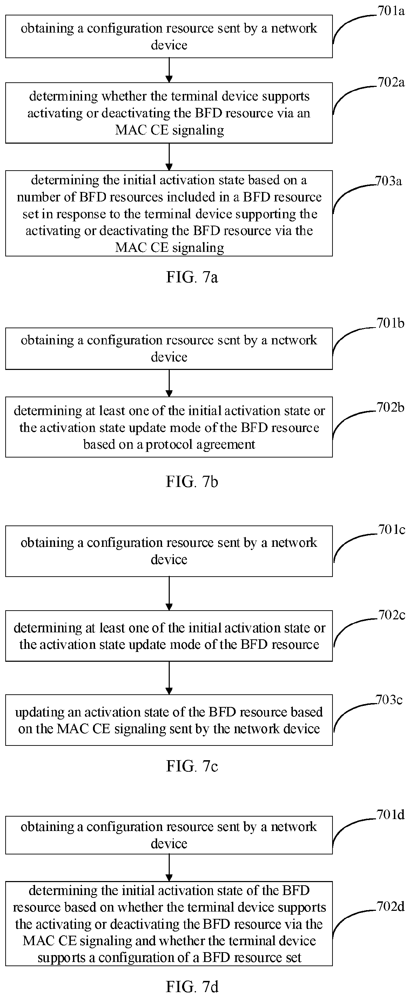

FIG. 7a is a schematic flowchart of an information determination method provided in an embodiment of the present invention, which is performed by a terminal device. As shown in FIG. 7a, the information determination method may include the following steps.

In step 701a, a configuration resource sent by a network device is obtained.

For the relevant introduction of the step 701a, reference may be made to the descriptions of the above embodiments, and details are not described herein again in the embodiments of the present invention.

In step 702a, it is determined whether the terminal device supports activating or deactivating the BFD resource via an MAC CE signaling.

In step 703a, the initial activation state is determined based on a number of BFD resources included in a BFD resource set in response to the terminal device supporting the activating or deactivating the BFD resource via the MAC CE signaling.

In an embodiment of the present invention, a method used in the step 703a for determining the initial activation state based on the number of BFD resources included in the BFD resource set may refer to the above embodiments of the step 302 in FIG. 3.

Further, for the relevant introduction of the steps 701a to 703a, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 7b is a schematic flowchart of an information determination method provided in an embodiment of the present invention, which is performed by a terminal device. As shown in FIG. 7b, the information determination method may include the following steps.

In step 701b, a configuration resource sent by a network device is obtained.

In step 702b, at least one of the initial activation state or the activation state update mode of the BFD resource is determined based on a protocol agreement.

Further, for the relevant introduction of the steps 701b to 702b, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 7c is a schematic flowchart of an information determination method provided in an embodiment of the present invention, which is performed by a terminal device. As shown in FIG. 7c, the information determination method may include the following steps.

In step 701c, a configuration resource sent by a network device is obtained.

In step 702c, at least one of the initial activation state or the activation state update mode of the BFD resource is determined.

In step 703c, an activation state of the BFD resource is updated based on the MAC CE signaling sent by the network device.

Further, for the relevant introduction of the steps 701c to 703c, reference may be made to the descriptions of the above embodiments.

After the initial activation state of the BFD resource is determined, the terminal device may activate or deactivate the BFD resource by receiving the MAC CE signaling sent by the network device, so as to update the activation state of the BFD resource.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 7d is a schematic flowchart of an information determination method provided in an embodiment of the present invention, which is performed by a terminal device. As shown in FIG. 7d, the information determination method may include the following steps.

In step 701d, a configuration resource sent by a network device is obtained.

For the relevant introduction of the step 701d, reference may be made to the descriptions of the above embodiments, and details are not described herein again in the embodiments of the present invention.

In step 702d, the initial activation state of the BFD resource is determined based on whether the terminal device supports the activating or deactivating the BFD resource via the MAC CE signaling and whether the terminal device supports a configuration of a BFD resource set.

It should be noted that, in an embodiment of the present invention, for the terminal device, it may not support the configuration of the BFD resource set, but only supports a direct configuration of the BFD resource by the network device.

Based on this, specific execution manners of the above step 702d may include any one of following situations.

In an embodiment of the present invention, the initial activation state of the BFD resource may be determined to be activated in response to the terminal device not supporting the configuration of the BFD resource set and not supporting the activating or deactivating the BFD resource via the MAC CE signaling.

In another embodiment of the present invention, the initial activation state of the BFD resource may be determined to be activated in response to the terminal device supporting the configuration of the BFD resource set and not supporting the activating or deactivating the BFD resource via the MAC CE signaling.

In another embodiment of the present invention, the initial activation state of the BFD resource may be determined to be deactivated in response to the terminal device supporting the configuration of the BFD resource set and supporting the activating or deactivating the BFD resource via the MAC CE signaling.

In another embodiment of the present invention, the initial activation state of the BFD resource may be determined to be deactivated in response to the terminal device not supporting the configuration of the BFD resource set and supporting the activating or deactivating the BFD resource via the MAC CE signaling.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

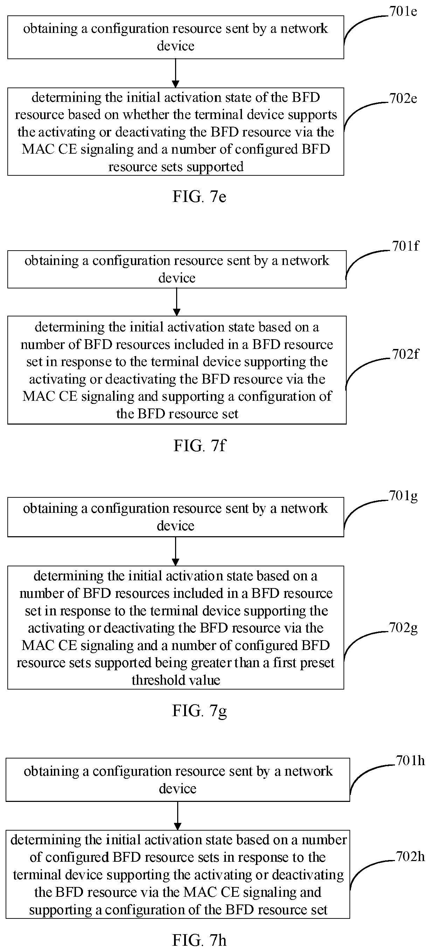

FIG. 7e is a schematic flowchart of an information determination method provided in an embodiment of the present invention, which is performed by a terminal device. As shown in FIG. 7e, the information determination method may include the following steps.

In step 701e, a configuration resource sent by a network device is obtained.

For the relevant introduction of the step 701e, reference may be made to the descriptions of the above embodiments, and details are not described herein again in the embodiments of the present invention.

In step 702e, the initial activation state of the BFD resource is determined based on whether the terminal device supports the activating or deactivating the BFD resource via the MAC CE signaling and a number of configured BFD resource sets supported.

Specific execution manners of the above step 702e may include any one of following situations.

In an embodiment of the present invention, in response to the terminal device not supporting the activating or deactivating the BFD resource via the MAC CE signaling, and the number of configured BFD resource sets supported being less than a first preset threshold value, the initial activation state of the BFD resource may be determined to be activated.

In an embodiment of the present invention, the first preset threshold value may be based on a protocol agreement, or may be configured by the network device. Also, the first preset threshold value may be a maximum number of "BFD resource sets" that the terminal device supports to be directly activated via an RRC signaling. The first preset threshold value may be the same as or different from the above second preset threshold value.

Further, it should be noted that, in an embodiment of the present invention, the number of configured BFD resource sets described above may be a number of BFD resource sets configured for a certain terminal device, or may be a number of BFD resource sets configured for a specified cell group, or may be a number of BFD resource sets configured for a specified cell, or may be a number of BFD resource sets configured for a specified BWP of a specified cell.

Further, in an embodiment of the present invention, when the number of configured BFD resource sets described above is the number of BFD resource sets configured for a certain terminal device, the first preset threshold value may be set to correspond to the terminal device. When the number of configured BFD resource sets described above is the number of BFD resource sets configured for a specified cell group, the first preset threshold value may be set to correspond to the specified cell group. When the number of configured BFD resource sets described above is the number of BFD resource sets configured for a specified cell, the first preset threshold value may be set to correspond to the specified cell. When the number of configured BFD resource sets described above is the number of BFD resource sets configured for a specified BWP of a specified cell, the first preset threshold value may be set to correspond to the specified BWP.

Based on this, illustratively, in an embodiment of the present invention, it is assumed that the first preset threshold value set to correspond to the specified BWP is 2. In this case, the initial activation state of the BFD resource may be determined to be activated if the terminal device does not support the activating or deactivating the BFD resource via the MAC CE signaling and a number of configured BFD resource sets on a specified BWP-1 of a specified cell-1 of the terminal device is 1.

In an embodiment of the present invention, the initial activation state of the BFD resource is determined to be activated based on that the terminal device supports the activating or deactivating the BFD resource via the MAC CE signaling and the number of configured BFD resource sets supported is less than the first preset threshold value.

Illustratively, in an embodiment of the present invention, it is assumed that the first preset threshold value set to correspond to the specified BWP is 2. In this case, the initial activation state of the BFD resource may be determined to be activated if the terminal device supports the activating or deactivating the BFD resource via the MAC CE signaling and a number of configured BFD resource sets on a specified BWP-1 of a specified cell-1 of the terminal device is 1.

In an embodiment of the present invention, the initial activation state of the BFD resource is determined to be activated based on the terminal device does not support the activating or deactivating the BFD resource via the MAC CE signaling and the number of configured BFD resource sets supported is greater than or equal to the first preset threshold value.

Illustratively, in an embodiment of the present invention, it is assumed that the first preset threshold value set to correspond to the specified BWP is 2. In this case, the initial activation state of the BFD resource may be determined to be activated if the terminal device does not support the activating or deactivating the BFD resource via the MAC CE signaling and a number of configured BFD resource sets on a specified BWP-1 of a specified cell-1 of the terminal device is 2.

In an embodiment of the present invention, the initial activation state of the BFD resource is determined to be deactivated based on the terminal device supports the activating or deactivating the BFD resource via the MAC CE signaling and the number of configured BFD resource sets supported is greater than or equal to the first preset threshold value.

Illustratively, in an embodiment of the present invention, it is assumed that the first preset threshold value set corresponding to the specified BWP is 2. In this case, the initial activation state of the BFD resource may be determined to be deactivated if the terminal device supports the activating or deactivating the BFD resource via the MAC CE signaling and a number of configured BFD resource sets on a specified BWP-1 of a specified cell-1 of the terminal device is 2.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Further, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 7f is a schematic flowchart of an information determination method provided in an embodiment of the present invention, which is performed by a terminal device. As shown in FIG. 7f, the information determination method may include the following steps.

In step 701f, a configuration resource sent by a network device is obtained.

For the relevant introduction of the step 701f, reference may be made to the descriptions of the above embodiments, and details are not described herein again in the embodiments of the present invention.

In step 702f, the initial activation state is determined based on a number of BFD resources included in a BFD resource set in response to the terminal device supporting the activating or deactivating the BFD resource via the MAC CE signaling and supporting a configuration of the BFD resource set.

In an embodiment of the present invention, a method used in the step 702f for determining the initial activation state based on the number of BFD resources included in the BFD resource set may refer to the step 302 in embodiments of FIG. 3 above.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 7g is a schematic flowchart of an information determination method provided in an embodiment of the present invention, which is performed by a terminal device. As shown in FIG. 7g, the information determination method may include the following steps.

In step 701g, a configuration resource sent by a network device is obtained.

For the relevant introduction of the step 701g, reference may be made to the descriptions of the above embodiments, and details are not described herein again in the embodiments of the present invention.

In step 702g, the initial activation state is determined based on a number of BFD resources included in a BFD resource set in response to the terminal device supporting the activating or deactivating the BFD resource via the MAC CE signaling and a number of configured BFD resource sets supported being greater than a first preset threshold value.

In an embodiment of the present invention, a method used in the step 702g for determining the initial activation state based on the number of BFD resources included in the BFD resource set may refer to the step 302 in the embodiment of FIG. 3 above.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 7h is a schematic flowchart of an information determination method provided in an embodiment of the present invention, which is performed by a terminal device. As shown in FIG. 7h, the information determination method may include the following steps.

In step 701h, a configuration resource sent by a network device is obtained.

In step 702h, the initial activation state is determined based on a number of configured BFD resource sets in response to the terminal device supporting the activating or deactivating the BFD resource via the MAC CE signaling and supporting a configuration of the BFD resource set.

Specifically, in an embodiment of the present invention, determining the initial activation state based on the number of configured BFD resource sets may include one of: determining the initial activation state of the BFD resource included in the BFD resource set to be activated in response to the number of configured BFD resource sets being less than or equal to a first preset threshold value; otherwise, determining the initial activation state of the BFD resource included in the BFD resource set to be deactivated.

Illustratively, in an embodiment of the present invention, it is assumed that the first preset threshold value is set to correspond to a specified BWP, and the first preset threshold value is 1. In this case, when the number of configured BFD resource sets on a specified BWP-1 of a specified cell-1 of the terminal device is 2, an initial activation state of the BFD resource included in the BFD resource set of the specified BWP-1 of the terminal device is determined to be deactivated in response to the number of configured BFD resource sets being greater than the first preset threshold value,.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

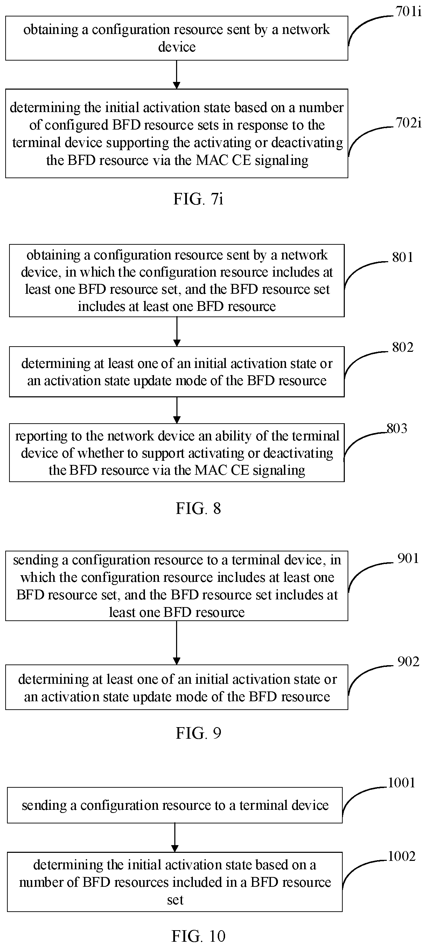

FIG. 7i is a schematic flowchart of an information determination method provided in an embodiment of the present invention, which is performed by a terminal device. As shown in FIG. 7i, the information determination method may include the following steps.

In step 701i, a configuration resource sent by a network device is obtained.

In step 702i, the initial activation state is determined based on a number of configured BFD resource sets in response to the terminal device supporting the activating or deactivating the BFD resource via the MAC CE signaling.

For the relevant introduction of the steps 701i to 702i, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 8 is a schematic flowchart of an information determination method provided in an embodiment of the present invention, which is performed by a terminal device. As shown in FIG. 8, the information determination method may include the following steps.

In step 801, a configuration resource sent by a network device is obtained.

In an embodiment of the present invention, the configuration resource may directly include at least one BFD resource.

Further, in another embodiment of the present invention, the configuration resource includes at least one BFD resource set, and the BFD resource set may include at least one BFD resource.

Furthermore, in an embodiment of the present invention, the above configuration resource may be a resource configured for a certain terminal device for use when performing a BFD, or may be a resource configured for a specified cell group for use when performing a BFD, or may be a resource configured for a specified cell for use when performing a BFD, or may be a resource configured for a specified BWP of a specified cell for use when performing a BFD.

In step 802, at least one of an initial activation state or an activation state update mode of the BFD resource is determined.

In step 803, an ability of the terminal device of whether to support activating or deactivating the BFD resource via the MAC CE signaling is reported to the network device.

In an embodiment of the present invention, the terminal device reports to the network device the ability of the terminal device of whether to support the activating or deactivating the BFD resource via the MAC CE signaling, so that the network device may determine at least one of the initial activation state or the activation state update mode based on the ability of the terminal device of whether to support the activating or deactivating the BFD resource via the MAC CE signaling, thereby ensuring that the terminal device and the network device keep a consistent understanding of the activation state and the activation mode of the BFD resource.

It should be noted that, in an embodiment of the present invention, the above step 803 may be performed after the steps 801 and 802, or before the steps 801 and 802, or between the steps 801 and 802.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 9 is a schematic flowchart of an information determination method provided in an embodiment of the present invention, which is performed by a network device. As shown in FIG. 9, the information determination method may include the following steps.

In step 901, a configuration resource is sent to a terminal device. The configuration resource includes at least one BFD resource set, and the BFD resource set includes at least one BFD resource.

In an embodiment of the present invention, the configuration resource may directly include at least one BFD resource.

Further, in another embodiment of the present invention, the configuration resource includes at least one BFD resource set, and the BFD resource set may include at least one BFD resource.

Furthermore, in an embodiment of the present invention, the above configuration resource may be a resource configured for a certain terminal device for use when performing a BFD, or may be a resource configured for a specified cell group for use when performing a BFD, or may be a resource configured for a specified cell for use when performing a BFD, or may be a resource configured for a specified BWP of a specified cell for use when performing a BFD.

Further, in an embodiment of the present invention, the BFD resource may include a corresponding reference signal, for example, the reference signal may be an SSB and/or a CSI-RS.

Furthermore, in an embodiment of the present invention, the above configuration resource may be sent by the network device via a first signaling. The first signaling may be an RRC signaling.

In step 902, at least one of an initial activation state or an activation state update mode of the BFD resource is determined.

In an embodiment of the present invention, the network device may determine the initial activation state and/or the activation state update mode of the BFD resource based on a number of BFD resources, a protocol agreement, and an ability of the terminal device of whether to support activating or deactivating the BFD resource via an MAC CE signaling reported by the terminal device. Also, for details about this part, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 10 is a schematic flowchart of an information determination method provided in an embodiment of the present invention, which is performed by a network device. As shown in FIG. 10, the information determination method may include the following steps.

In step 1001, a configuration resource is sent to a terminal device.

For the relevant introduction of the step 1001, reference may be made to the descriptions of the above embodiments.

In step 1002, the initial activation state is determined based on a number of BFD resources included in a BFD resource set.

For the relevant introduction of the steps 1001 to 1002, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

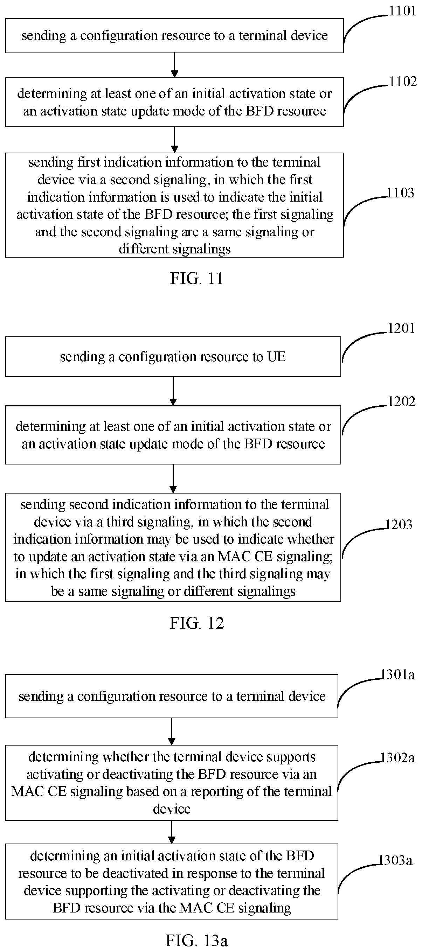

FIG. 11 is a schematic flowchart of an information determination method provided in an embodiment of the present invention, which is performed by a network device. As shown in FIG. 11, the information determination method may include the following steps.

In step 1101, a configuration resource is sent to a terminal device.

In step 1102, at least one of an initial activation state or an activation state update mode of the BFD resource is determined.

In step 1103, first indication information is sent to the terminal device via a second signaling. The first indication information is used to indicate the initial activation state of the BFD resource. The first signaling and the second signaling are the same signaling or different signalings.

In an embodiment of the present invention, the first indication information is used to indicate at least one of: uniformly indicating the initial activation state for all BFD resource sets; respectively indicating initial activation states of BFD resources in different resource groups with the resource group as a granularity, in which the configuration resource includes at least one resource group, and the resource group includes at least one BFD resource set; respectively indicating initial activation states of BFD resources in different BFD resource sets with the BFD resource set as a granularity; or respectively indicating initial activation states corresponding to different BFD resources with the BFD resource as a granularity.

For the relevant introduction of the steps 1101 to 1103, reference may be made to the description of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 12 is a schematic flowchart of an information determination method provided in an embodiment of the present invention, which is performed by a network device. As shown in FIG. 12, the information determination method may include the following steps.

In step 1201, a configuration resource is sent to a terminal device.

In step 1202, at least one of an initial activation state or an activation state update mode of the BFD resource is determined.

In step 1203, second indication information is sent to the terminal device via a third signaling. The second indication information may be used to indicate whether to update an activation state via an MAC CE signaling. The first signaling and the third signaling may be the same signaling or different signalings.

In an embodiment of the present invention, the first indication information is used to indicate at least one of: uniformly indicating whether to update the activation state via the MAC CE signaling for all BFD resource sets; respectively indicating whether the activation states of different resource groups are updated via the MAC CE signaling with the resource group as a granularity; in which the configuration resource includes at least one resource group, and the resource group includes at least one BFD resource set; respectively indicating whether the activation states of different BFD resource sets are updated via the MAC CE signaling with the BFD resource set as a granularity; or respectively indicating whether the activation states of different BFD resources are updated via the MAC CE signaling with the BFD resource as a granularity.

For the relevant introduction of the steps 1201 to 1203, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 13a is a schematic flowchart of an information determination method provided in an embodiment of the present invention, which is performed by a network device. As shown in FIG. 13a, the information determination method may include the following steps.

In step 1301a, a configuration resource is sent to a terminal device.

In step 1302a, whether the terminal device supports activating or deactivating the BFD resource via an MAC CE signaling is determined based on a reporting of the terminal device.

In step 1303a, an initial activation state of the BFD resource is determined to be deactivated in response to the terminal device supporting the activating or deactivating the BFD resource via the MAC CE signaling.

For the relevant introduction of the steps 1301a to 1303a, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

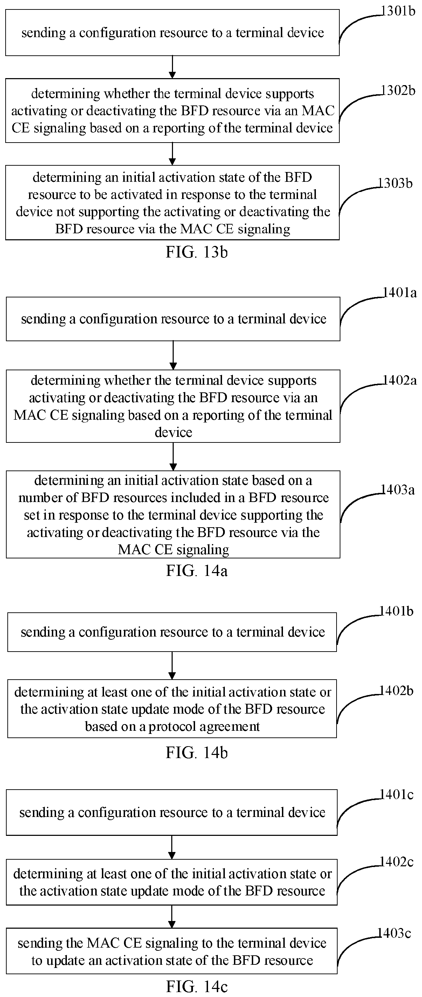

FIG. 13b is a schematic flowchart of an information determination method provided in an embodiment of the present invention, which is performed by a network device. As shown in FIG. 13b, the information determination method may include the following steps.

In step 1301b, a configuration resource is sent to a terminal device.

In step 1302b, whether the terminal device supports activating or deactivating the BFD resource via an MAC CE signaling is determined based on a reporting of the terminal device.

In step 1303b, an initial activation state of the BFD resource is determined to be activated in response to the terminal device not supporting the activating or deactivating the BFD resource via the MAC CE signaling.

For the relevant introduction of the steps 1301b to 1303b, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 14a is a schematic flowchart of an information determination method provided in an embodiment of the present invention, which is performed by a network device. As shown in FIG. 14a, the information determination method may include the following steps.

In step 1401a, a configuration resource is sent to a terminal device.

In step 1402a, whether the terminal device supports activating or deactivating the BFD resource via an MAC CE signaling is determined based on a reporting of the terminal device.

In step 1403a, an initial activation state is determined based on a number of BFD resources included in a BFD resource set in response to the terminal device supporting the activating or deactivating the BFD resource via the MAC CE signaling.

For the relevant introduction of the steps 1401a to 1403a, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 14b is a schematic flowchart of an information determination method provided in an embodiment of the present invention, which is performed by a network device. As shown in FIG. 14b, the information determination method may include the following steps.

In step 1401b, a configuration resource is sent to a terminal device.

In step 1402b, at least one of the initial activation state or the activation state update mode of the BFD resource is determined based on a protocol agreement.

For the relevant introduction of the steps 1401b to 1402b, reference may be made to the descriptions of the above embodiments.

To sum up, in the information determination method provided in embodiments of the present invention, the terminal device first obtains the configuration resource sent by the network device, in which the configuration resource includes at least one BFD resource, and determines at least one of the initial activation state or the activation state update mode of the BFD resource. It may be seen that, in embodiments of the present invention, the terminal device may first be aware of resources included in the network device via the configuration resource, and determines at least one of the initial activation state or the activation state update mode of the BFD resource through multiple processes. Illustratively, at least one of the initial activation state or the activation state update mode of the BFD resource may be determined by processes for determining the initial activation state by the number of configuration resources or determining the activation state update mode by transmitting a configuration resource signaling. In addition, in embodiments of the present invention, after the terminal device obtains the configuration resource sent by the network device, the terminal device may determine the initial activation state of the BFD resource based on a terminal device ability. In order to ensure that the network device is aware of the initial activation state and/or used activation mode of the BFD resource determined based on the terminal device ability, the terminal device may report its own ability to the network device to ensure that the network device and the terminal device keep a consistent understanding.

FIG. 14c is a schematic flowchart of an information determination method provided in an embodiment of the present invention, which is performed by a network device. As shown in FIG. 14c, the information determination method may include the following steps.

In step 1401c, a configuration resource is sent to a terminal device.

In step 1402c, at least one of the initial activation state or the activation state update mode of the BFD resource is determined.

In step 1403c, the MAC CE signaling is sent to the terminal device to update an activation state of the BFD resource.

Further, for the relevant introduction of the steps 1401c to 1403c, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

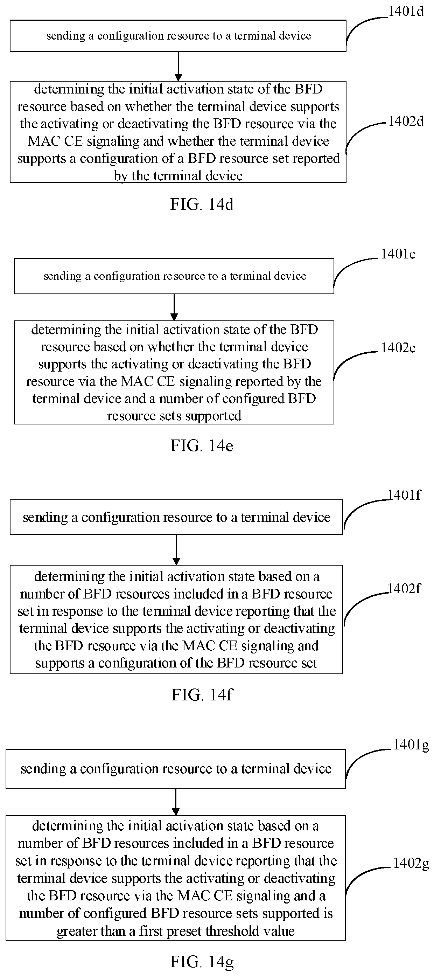

FIG. 14d is a schematic flowchart of an information determination method provided in an embodiment of the present invention, which is performed by a network device. As shown in FIG. 14d, the information determination method may include the following steps.

In step 1401d, a configuration resource is sent to a terminal device.

In step 1402d, the initial activation state of the BFD resource is determined based on whether the terminal device supports the activating or deactivating the BFD resource via the MAC CE signaling and whether the terminal device supports a configuration of a BFD resource set reported by the terminal device.

Further, for the relevant introduction of the steps 1401d to 1402d, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 14e is a schematic flowchart of an information determination method provided in an embodiment of the present invention, which is performed by a network device. As shown in FIG. 14e, the information determination method may include the following steps.

In step 1401e, a configuration resource is sent to a terminal device.

In step 1402e, the initial activation state of the BFD resource is determined based on whether the terminal device supports the activating or deactivating the BFD resource via the MAC CE signaling reported by the terminal device and a number of configured BFD resource sets supported.

Further, for the relevant introduction of the steps 1401e to 1402e, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 14f is a schematic flowchart of an information determination method provided in an embodiment of the present invention, which is performed by a network device. As shown in FIG. 14f, the information determination method may include the following steps.

In step 1401f, a configuration resource is sent to a terminal device.

In step 1402f, the initial activation state is determined based on a number of BFD resources included in a BFD resource set in response to the terminal device reporting that the terminal device supports the activating or deactivating the BFD resource via the MAC CE signaling and supports a configuration of the BFD resource set.

Further, for the relevant introduction of the steps 1401f to 1402f, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 14g is a schematic flowchart of an information determination method provided in an embodiment of the present invention, which is performed by a network device. As shown in FIG. 14g, the information determination method may include the following steps.

In step 1401g, a configuration resource is sent to a terminal device.

In step 1402g, the initial activation state is determined based on a number of BFD resources included in a BFD resource set in response to the terminal device reporting that the terminal device supports the activating or deactivating the BFD resource via the MAC CE signaling and a number of configured BFD resource sets supported is greater than a first preset threshold value.

Further, for the relevant introduction of the steps 1401g to 1402g, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

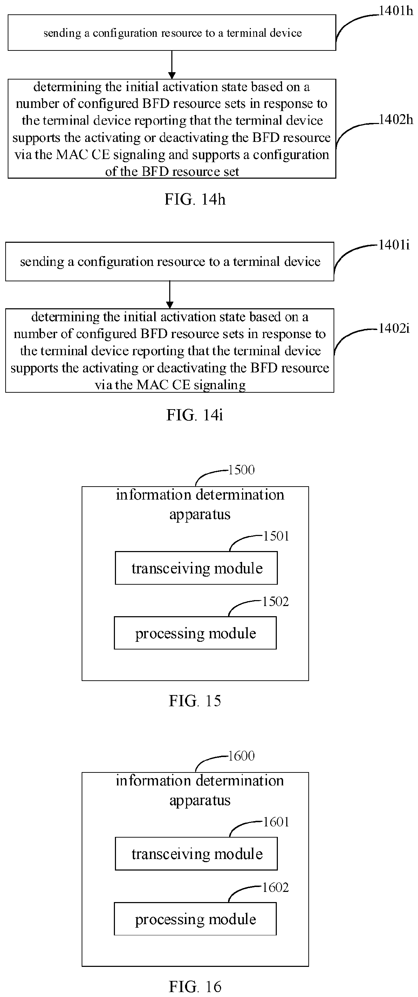

FIG. 14h is a schematic flowchart of an information determination method provided in an embodiment of the present invention, which is performed by a network device. As shown in FIG. 14h, the information determination method may include the following steps.

In step 1401h, a configuration resource is sent to a terminal device.

In step 1402h, the initial activation state is determined based on a number of configured BFD resource sets in response to the terminal device reporting that the terminal device supports the activating or deactivating the BFD resource via the MAC CE signaling and supports a configuration of the BFD resource set.

Further, for the relevant introduction of the steps 1401h to 1402h, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 14i is a schematic flowchart of an information determination method provided in an embodiment of the present invention, which is performed by a network device. As shown in FIG. 14i, the information determination method may include the following steps.

In step 1401i, a configuration resource is sent to a terminal device.

In step 1402i, the initial activation state is determined based on a number of configured BFD resource sets in response to the terminal device reporting that the terminal device supports the activating or deactivating the BFD resource via the MAC CE signaling.

Further, for the relevant introduction of the steps 1401i to 1402i, reference may be made to the descriptions of the above embodiments.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

FIG. 15 is a schematic block diagram of an information determination apparatus provided in an embodiment of the present invention. As shown in FIG. 15, the information determination apparatus includes: a transceiving module configured to obtain a configuration resource sent by a network device, in which the configuration resource includes at least one BFD resource set, and the BFD resource set includes at least one BFD resource; and a processing module configured to determine at least one of an initial activation state or an activation state update mode of the BFD resource.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

Optionally, in an embodiment of the present invention, the transceiving module is further configured to: obtain the configuration resource sent by the network device via a first signaling.

Optionally, in an embodiment of the present invention, the processing module is further configured to: determine the initial activation state based on a number of BFD resources included in a BFD resource set.

Optionally, in an embodiment of the present invention, the processing module is further configured to: obtain first indication information sent by the network device via a second signaling, in which the first indication information is used to indicate the initial activation state of the BFD resource; in which the first signaling and the second signaling are the same signaling or different signalings; and determine the initial activation state of the BFD resource based on the first indication information.

Optionally, in an embodiment of the present invention, a resource granularity indicated by the first indication information is one of: all BFD resource sets; a BFD resource group, in which the BFD resource group includes at least one BFD resource set; a BFD resource set; or a BFD resource.

Optionally, in an embodiment of the present invention, the processing module is further configured to: obtain second indication information sent by the network device via a third signaling, in which the second indication information is used to indicate whether to update an activation state via a media access control random access response (MAC CE) signaling; in which the first signaling and the third signaling are the same signaling or different signalings; and determine the activation state update mode of the BFD resource based on the third signaling.

Optionally, in an embodiment of the present invention, a resource granularity indicated by the second indication information is one of: all BFD resource sets; a BFD resource group, in which the BFD resource group includes at least one BFD resource set; a BFD resource set; or a BFD resource.

Optionally, in an embodiment of the present invention, the processing module is further configured to: determine the initial activation state of the BFD resource based on whether the terminal device supports activating or deactivating the BFD resource via an MAC CE signaling.

Optionally, in an embodiment of the present invention, the processing module is further configured to: determine the initial activation state of the BFD resource based on whether the terminal device supports the activating or deactivating the BFD resource via the MAC CE signaling and whether the terminal device supports a configuration of a BFD resource set.

Optionally, in an embodiment of the present invention, the processing module is further configured to: determine the initial activation state of the BFD resource based on whether the terminal device supports the activating or deactivating the BFD resource via the MAC CE signaling and a number of configured BFD resource sets supported.

Optionally, in an embodiment of the present invention, the processing module is further configured to: determine the initial activation state based on a number of BFD resources included in a BFD resource set in response to the terminal device supporting the activating or deactivating the BFD resource via the MAC CE signaling and supporting a configuration of the BFD resource set.

Optionally, in an embodiment of the present invention, the processing module is further configured to: determine the initial activation state based on a number of BFD resources included in a BFD resource set in response to the terminal device supporting the activating or deactivating the BFD resource via the MAC CE signaling and a number of configured BFD resource sets supported being greater than a first preset threshold value.

Optionally, in an embodiment of the present invention, the processing module is further configured to: determine the initial activation state based on a number of configured BFD resource sets in response to the terminal device supporting the activating or deactivating the BFD resource via the MAC CE signaling and supporting a configuration of the BFD resource set.

Optionally, in an embodiment of the present invention, the processing module is further configured to: determine the initial activation state of the BFD resource to be deactivated in response to the terminal device supporting the activating or deactivating the BFD resource via the MAC CE signaling.

Optionally, in an embodiment of the present invention, the processing module is further configured to: determine the initial activation state of the BFD resource to be activated in response to the terminal device not supporting the activating or deactivating the BFD resource via the MAC CE signaling.

Optionally, in an embodiment of the present invention, the processing module is further configured to: determine the initial activation state based on a number of BFD resources included in a BFD resource set in response to the terminal device supporting the activating or deactivating the BFD resource via the MAC CE signaling.

Optionally, in an embodiment of the present invention, the processing module is further configured to: determine the initial activation state based on a number of configured BFD resource sets in response to the terminal device supporting the activating or deactivating the BFD resource via the MAC CE signaling.

Optionally, in an embodiment of the present invention, the processing module is further configured to: determine the initial activation state of the BFD resource included in the BFD resource set to be activated in response to the number of configured BFD resource sets being less than or equal to a first preset threshold value; otherwise, determine the initial activation state of the BFD resource included in the BFD resource set to be deactivated.

Optionally, in an embodiment of the present invention, the processing module is further configured to: determine an initial activation state of all BFD resources to be activated in response to a number of BFD resources included in any BFD resource set being less than or equal to a second preset threshold value; otherwise, determine an initial activation state of all BFD resources to be deactivated; determine an initial activation state of all BFD resources to be activated in response to a number of BFD resources included in each BFD resource set being less than or equal to a second preset threshold value; otherwise, determine an initial activation state of all BFD resources to be deactivated; determine an initial activation state of the BFD resource included in a corresponding BFD resource set to be activated in response to the number of BFD resources included in the corresponding BFD resource set being less than or equal to a second preset threshold value; otherwise, determine an initial activation state of the BFD resource included in a corresponding BFD resource set to be deactivated in response to the number of BFD resources included in the corresponding BFD resource set being greater than a second preset threshold value; determine an initial activation state of all BFD resources to be activated in response to a total number of BFD resources being less than or equal to a second preset threshold value; otherwise, determine an initial activation state of all BFD resources to be deactivated.

Optionally, in an embodiment of the present invention, the apparatus is further configured to: report to the network device an ability of the terminal device of whether to support activating or deactivating the BFD resource via the MAC CE signaling.

Optionally, in an embodiment of the present invention, the processing module is further configured to: determine at least one of the initial activation state or the activation state update mode of the BFD resource based on a protocol agreement.

Optionally, in an embodiment of the present invention, the apparatus is further configured to: report to the network device an ability of the terminal device of whether to support activating or deactivating the BFD resource via the MAC CE signaling.

Optionally, in an embodiment of the present invention, the processing module is further configured to: determine at least one of the initial activation state or the activation state update mode of the BFD resource based on a protocol agreement.

Optionally, in an embodiment of the present invention, the apparatus is further configured to: update an activation state of the BFD resource based on the MAC CE signaling sent by the network device.

FIG. 16 is a schematic block diagram of an information determination apparatus provided in an embodiment of the present invention. As shown in FIG. 16, the information determination apparatus includes: a transceiving module configured to send a configuration resource to a terminal device, in which the configuration resource includes at least one BFD resource set, and the BFD resource set includes at least one BFD resource; and a processing module configured to determine at least one of an initial activation state or an activation state update mode of the BFD resource.

To sum up, in the information determination method provided in embodiments of the present invention, the terminal device first obtains the configuration resource sent by the network device, the configuration resource includes at least one BFD resource, and then the terminal device may determine at least one of the initial activation state or the activation state update mode of the BFD resource. The terminal device may specifically determine the initial activation state and/or activation state update mode of the BFD resource based on the number of BFD resources, the signaling indication of the network device, or the terminal device ability (the ability of the terminal device of whether to support activating or deactivating the BFD resource via the MAC CE signaling). When the terminal device determines the initial activation state and/or the activation state update mode based on the signaling indication of the network device, the terminal device and the network device may have the same determination result for "the initial activation state and the activation state update mode". Also, when the terminal device does not determine the initial activation state and/or the activation state update mode based on the signaling indication of the network device, the terminal device and the network device may both determine the initial activation state and/or the activation state update mode based on the number of BFD resources or the terminal device ability. That is, the terminal device and the network device use the same process to determine the initial activation state and/or the activation state update mode. As a result, the terminal device and the network device may also have the same determination result for "the initial activation state and the activation state update mode", thereby ensuring that the terminal device and the network device keep a consistent understanding of the activation state and the activation mode of the BFD resource.

Optionally, in an embodiment of the present invention, the transceiving module is further configured to: send the configuration resource to the terminal device via a first signaling.

Optionally, in an embodiment of the present invention, the processing module is further configured to: determine the initial activation state based on a number of BFD resources included in a BFD resource set.

Optionally, in an embodiment of the present invention, the apparatus is further configured to: send first indication information to the terminal device via a second signaling, in which the first indication information is used to indicate the initial activation state of the BFD resource; in which the first signaling and the second signaling are the same signaling or different signalings.

Optionally, in an embodiment of the present invention, a resource granularity indicated by the first indication information is one of: all BFD resource sets; a BFD resource group, in which the BFD resource group includes at least one BFD resource set; a BFD resource set; or a BFD resource.

Optionally, in an embodiment of the present invention, the apparatus is further configured to: send second indication information to the terminal device via a third signaling, in which the second indication information is used to indicate whether to update an activation state via an MAC CE signaling; in which the first signaling and the third signaling are the same signaling or different signalings.

Optionally, in an embodiment of the present invention, a resource granularity indicated by the second indication information is one of: all BFD resource sets; a BFD resource group, in which the BFD resource group includes at least one BFD resource set; a BFD resource set; or a BFD resource.

Optionally, in an embodiment of the present invention, the apparatus is further configured to: determine whether the terminal device supports activating or deactivating the BFD resource via an MAC CE signaling based on a reporting of the terminal device.

Optionally, in an embodiment of the present invention, the processing module is further configured to: determine the initial activation state of the BFD resource based on whether the terminal device supports the activating or deactivating the BFD resource via the MAC CE signaling reported by the terminal device.

Optionally, in an embodiment of the present invention, the processing module is further configured to: determine the initial activation state of the BFD resource based on whether the terminal device supports the activating or deactivating the BFD resource via the MAC CE signaling and whether the terminal device supports a configuration of a BFD resource set reported by the terminal device.

Optionally, in an embodiment of the present invention, the processing module is further configured to: determine the initial activation state of the BFD resource based on whether the terminal device supports the activating or deactivating the BFD resource via the MAC CE signaling reported by the terminal device and a number of configured BFD resource sets supported.

Optionally, in an embodiment of the present invention, the processing module is further configured to: determine the initial activation state based on a number of BFD resources included in a BFD resource set in response to the terminal device reporting that the terminal device supports the activating or deactivating the BFD resource via the MAC CE signaling and supports a configuration of the BFD resource set.

Optionally, in an embodiment of the present invention, the processing module is further configured to: determine the initial activation state based on a number of BFD resources included in a BFD resource set in response to the terminal device reporting that the terminal device supports the activating or deactivating the BFD resource via the MAC CE signaling and a number of configured BFD resource sets supported is greater than a first preset threshold value.

Optionally, in an embodiment of the present invention, the processing module is further configured to: determine the initial activation state based on a number of configured BFD resource sets in response to the terminal device reporting that the terminal device supports the activating or deactivating the BFD resource via the MAC CE signaling and supports a configuration of the BFD resource set.

Optionally, in an embodiment of the present invention, the processing module is further configured to: determine the initial activation state of the BFD resource to be deactivated in response to the terminal device reporting that the terminal device supports the activating or deactivating the BFD resource via the MAC CE signaling.

Optionally, in an embodiment of the present invention, the processing module is further configured to: determine the initial activation state of the BFD resource to be activated in response to the terminal device reporting that the terminal device does not support the activating or deactivating the BFD resource via the MAC CE signaling.

Optionally, in an embodiment of the present invention, the processing module is further configured to: determine the initial activation state based on a number of BFD resources included in a BFD resource set in response to the terminal device reporting that the terminal device supports the activating or deactivating the BFD resource via the MAC CE signaling.

Optionally, in an embodiment of the present invention, the processing module is further configured to: determine the initial activation state based on a number of configured BFD resource sets in response to the terminal device reporting that the terminal device supports the activating or deactivating the BFD resource via the MAC CE signaling.

Optionally, in an embodiment of the present invention, the processing module is further configured to: determine the initial activation state of the BFD resource included in the BFD resource set to be activated in response to the number of configured BFD resource sets being less than or equal to a first preset threshold value; otherwise, determine the initial activation state of the BFD resource included in the BFD resource set to be deactivated.

Optionally, in an embodiment of the present invention, the processing module is further configured to: determine an initial activation state of all BFD resources to be activated in response to a number of BFD resources included in any BFD resource set being less than or equal to a second preset threshold value; otherwise, determine an initial activation state of all BFD resources to be deactivated; determine an initial activation state of all BFD resources to be activated in response to a number of BFD resources included in each BFD resource set being less than or equal to a second preset threshold value; otherwise, determine an initial activation state of all BFD resources to be deactivated; determine an initial activation state of the BFD resource included in a corresponding BFD resource set to be activated in response to the number of BFD resources included in the corresponding BFD resource set being less than or equal to a second preset threshold value; otherwise, determine an initial activation state of the BFD resource included in a corresponding BFD resource set to be deactivated in response to the number of BFD resources included in the corresponding BFD resource set being greater than a second preset threshold value; determine an initial activation state of all BFD resources to be activated in response to a total number of BFD resources being less than or equal to a second preset threshold value; otherwise, determine an initial activation state of all BFD resources to be deactivated.

Optionally, in an embodiment of the present invention, the processing module is further configured to: determine at least one of the initial activation state or the activation state update mode of the BFD resource based on a protocol agreement.

Optionally, in an embodiment of the present invention, the apparatus is further configured to: send the MAC CE signaling to the terminal device to update an activation state of the BFD resource.

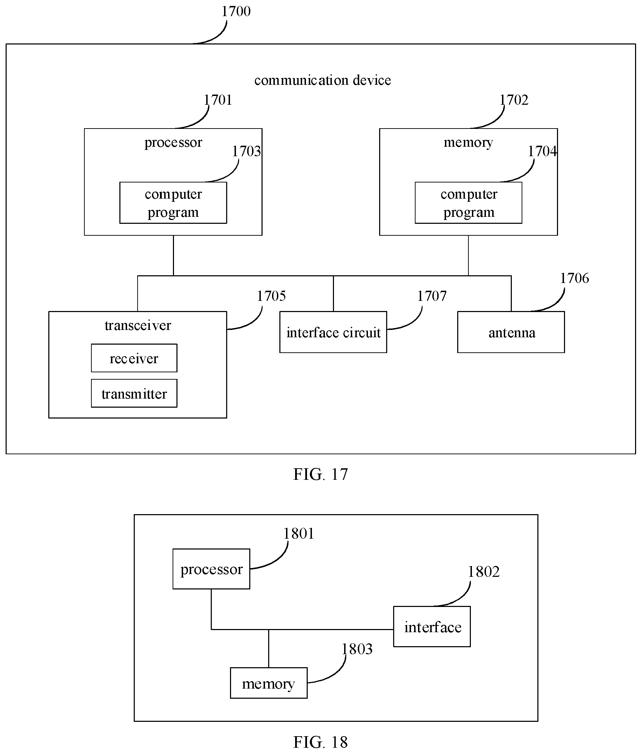

Referring to FIG. 17, which is a schematic block diagram of a communication device 1700 provided in an embodiment of the present invention, the communication device 1700 may be a network device, may also be a terminal device, may also be a chip, a chip system, or a processor that supports the network device to implement the above methods, and may also be a chip, a chip system, or a processor that supports the terminal device to implement the above methods. The device may be configured to implement the methods as described in the above method embodiments, and for details thereof, reference may be made to the descriptions in the above method embodiments.

The communication device 1700 may include one or more processors 1701. The processor 1701 may be a general-purpose processor or a special-purpose processor. For example, the processor 1701 may be a baseband processor or a central processing unit. The baseband processor may be configured to process a communication protocol and communication data, and the central processing unit may be configured to control a communication device (such as a base station, a baseband chip, the terminal device, a terminal device chip, a DU, a CU, or the like), execute computer programs, and process data of computer programs.

Optionally, the communication device 1700 may further include one or more memories 1702 having stored therein a computer program 1704. The processor 1701 executes the computer program 1704, to cause the communication device 1700 to implement the methods as described in the above method embodiments. Optionally, the memory 1702 may have stored therein data. The communication device 1700 and the memory 1702 may be provided separately or integrated together.

Optionally, the communication device 1700 may further include a transceiver 1705 and an antenna 1706. The transceiver 1705 may be called a transceiving element, a transceiving machine, a transceiving circuit or the like, for implementing a transceiving function. The transceiver 1705 may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device 1700 may further include one or more interface circuits 1707. The interface circuit 1707 is configured to receive a code instruction and transmit the code instruction to the processor 1701. The processor 1701 runs the code instruction to enable the communication device 1700 to execute the methods as described in the above method embodiments.

In an implementation, the processor 1701 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor 1701 may have stored therein a computer program 1703 that, when running on the processor 1701, causes the communication device 1700 to implement the methods as described in the above method embodiments. The computer program 1703 may be embedded in the processor 1701, and in this case, the processor 1701 may be implemented by a hardware.

In an implementation, the communication device 1700 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), a negative metal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device, but the scope of the communication device described in the present invention is not limited thereto, and a structure of the communication device is not limited by FIG. 17. The communication device may be a stand-alone device or may be a part of a larger device. For example, the communication device may be: (1) a stand-alone integrated circuit (IC), or a chip, or a chip system or subsystem; (2) a set of one or more ICs, in which optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, reference may be made to a schematic diagram of the chip shown in FIG. 18. The chip shown in FIG. 18 includes a processor 1801 and an interface 1802. In the chip, one or more processors 1801 may be provided, and more than one interface 1802 may be provided.

Optionally, the chip further includes a memory 1803 for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of the embodiments of the present invention.

The present invention further provides a readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to the embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as an infrared manner, a cordless manner, via microwave, or the like). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those of ordinary skill in the art can understand that the first, second, and other numeral numbers involved in the present invention are distinguished only for convenience of description, and are not intended to limit the scope of the embodiments of the present invention, and nor are they intended to represent sequential order.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of precedence or size.

The correspondence shown in each table in the present invention may be configured or predefined. The values of information in each table are just examples, and may be configured as other values, which are not limited in the present invention. When configuring a correspondence between the information and various parameters, it is not necessary to configure all the correspondences shown in the tables. For example, the correspondences shown in some rows of the tables in the present invention may not be configured. For another example, appropriate variations or adjustments (such as splitting, merging, and so on) can be made based on the above tables. The names of parameters shown in the titles of the above tables may also adopt other names understandable in the communication device, and the values or representations of the parameters may also be other values or representations understandable in the communication device. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present invention may be understood as definition, predefinition, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such an implementation should not be considered as extending beyond the scope of the present invention.

Those skilled in the art can clearly understand that for the convenience and brevity of the description, for the specific working process of the above-described system, device and unit, reference may be made to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. An information determination method, performed by a terminal device, comprising:
obtaining a configuration resource sent by a network device, wherein the configuration resource comprises at least one beam failure detection (BFD) resource; and
determining at least one of an initial activation state or an activation state update mode of the BFD resource.

2. The method according to claim 1, wherein the configuration resource comprises at least one BFD resource set, and the BFD resource set comprises at least one BFD resource.

3. The method according to claim 1 or 2, wherein obtaining the configuration resource sent by the network device comprises:
obtaining the configuration resource sent by the network device via a first signaling.

4. The method according to any one of claims 1 to 3, wherein determining the initial activation state of the BFD resource comprises:
determining the initial activation state based on a number of BFD resources comprised in a BFD resource set.

5. The method according to any one of claims 1 to 3, wherein determining the initial activation state of the BFD resource comprises:
obtaining first indication information sent by the network device via a second signaling, wherein the first indication information is used to indicate the initial activation state of the BFD resource; wherein the first signaling and the second signaling are the same signaling or different signalings; and
determining the initial activation state of the BFD resource based on the first indication information.

6. The method according to claim 5, wherein a resource granularity indicated by the first indication information is one of:
all BFD resource sets;
a BFD resource group, wherein the BFD resource group comprises at least one BFD resource set;
a BFD resource set; or
a BFD resource.

7. The method according to any one of claims 1 to 3, wherein determining the activation state update mode of the BFD resource comprises:
obtaining second indication information sent by the network device via a third signaling, wherein the second indication information is used to indicate whether to update an activation state via a media access control random access response (MAC CE) signaling; wherein the first signaling and the third signaling are the same signaling or different signalings; and
determining the activation state update mode of the BFD resource based on the third signaling.

8. The method according to claim 7, wherein a resource granularity indicated by the second indication information is one of:
all BFD resource sets;
a BFD resource group, wherein the BFD resource group comprises at least one BFD resource set;
a BFD resource set; or
a BFD resource.

9. The method according to any one of claims 1 to 3, wherein determining the initial activation state of the BFD resource comprises:
determining the initial activation state of the BFD resource based on whether the terminal device supports activating or deactivating the BFD resource via an MAC CE signaling.

10. The method according to claim 9, wherein determining the initial activation state of the BFD resource based on whether the terminal device supports the activating or deactivating the BFD resource via the MAC CE signaling comprises:
determining the initial activation state of the BFD resource based on whether the terminal device supports the activating or deactivating the BFD resource via the MAC CE signaling and whether the terminal device supports a configuration of a BFD resource set.

11. The method according to claim 9, wherein determining the initial activation state of the BFD resource based on whether the terminal device supports the activating or deactivating the BFD resource via the MAC CE signaling comprises:
determining the initial activation state of the BFD resource based on whether the terminal device supports the activating or deactivating the BFD resource via the MAC CE signaling and a number of configured BFD resource sets supported.

12. The method according to claim 9, wherein determining the initial activation state of the BFD resource based on whether the terminal device supports the activating or deactivating the BFD resource via the MAC CE signaling comprises:
determining the initial activation state based on a number of BFD resources comprised in a BFD resource set in response to the terminal device supporting the activating or deactivating the BFD resource via the MAC CE signaling and supporting a configuration of the BFD resource set.

13. The method according to claim 9, wherein determining the initial activation state of the BFD resource based on whether the terminal device supports the activating or deactivating the BFD resource via the MAC CE signaling comprises:
determining the initial activation state based on a number of BFD resources comprised in a BFD resource set in response to the terminal device supporting the activating or deactivating the BFD resource via the MAC CE signaling and a number of configured BFD resource sets supported being greater than a first preset threshold value.

14. The method according to claim 9, wherein determining the initial activation state of the BFD resource based on whether the terminal device supports the activating or deactivating the BFD resource via the MAC CE signaling comprises:
determining the initial activation state based on a number of configured BFD resource sets in response to the terminal device supporting the activating or deactivating the BFD resource via the MAC CE signaling and supporting a configuration of the BFD resource set.

15. The method according to claim 9, wherein determining the initial activation state of the BFD resource based on whether the terminal device supports the activating or deactivating the BFD resource via the MAC CE signaling comprises:
determining the initial activation state of the BFD resource to be deactivated in response to the terminal device supporting the activating or deactivating the BFD resource via the MAC CE signaling.

16. The method according to claim 9, wherein determining the initial activation state of the BFD resource based on whether the terminal device supports the activating or deactivating the BFD resource via the MAC CE signaling comprises:
determining the initial activation state of the BFD resource to be activated in response to the terminal device not supporting the activating or deactivating the BFD resource via the MAC CE signaling.

17. The method according to claim 9, wherein determining the initial activation state of the BFD resource based on whether the terminal device supports the activating or deactivating the BFD resource via the MAC CE signaling comprises:
determining the initial activation state based on a number of BFD resources comprised in a BFD resource set in response to the terminal device supporting the activating or deactivating the BFD resource via the MAC CE signaling.

18. The method according to claim 9, wherein determining the initial activation state of the BFD resource based on whether the terminal device supports the activating or deactivating the BFD resource via the MAC CE signaling comprises:
determining the initial activation state based on a number of configured BFD resource sets in response to the terminal device supporting the activating or deactivating the BFD resource via the MAC CE signaling.

19. The method according to claim 14 or 18, wherein determining the initial activation state based on the number of configured BFD resource sets comprises:
determining the initial activation state of the BFD resource comprised in the BFD resource set to be activated in response to the number of configured BFD resource sets being less than or equal to a first preset threshold value; otherwise, determining the initial activation state of the BFD resource comprised in the BFD resource set to be deactivated.

20. The method according to claim 4 or 12 or 14 or 17, wherein a process for determining the initial activation state based on the number of BFD resources comprised in the BFD resource set comprises one of:
determining an initial activation state of all BFD resources to be activated in response to a number of BFD resources comprised in any BFD resource set being less than or equal to a second preset threshold value; otherwise, determining an initial activation state of all BFD resources to be deactivated;
determining an initial activation state of all BFD resources to be activated in response to a number of BFD resources comprised in each BFD resource set being less than or equal to a second preset threshold value; otherwise, determining an initial activation state of all BFD resources to be deactivated;
determining an initial activation state of the BFD resource comprised in a corresponding BFD resource set to be activated in response to the number of BFD resources comprised in the corresponding BFD resource set being less than or equal to a second preset threshold value; otherwise, determining an initial activation state of the BFD resource comprised in a corresponding BFD resource set to be deactivated in response to the number of BFD resources comprised in the corresponding BFD resource set being greater than a second preset threshold value; or
determining an initial activation state of all BFD resources to be activated in response to a total number of BFD resources being less than or equal to a second preset threshold value; otherwise, determining an initial activation state of all BFD resources to be deactivated.

21. The method according to claim 9, further comprising:
reporting to the network device an ability of the terminal device of whether to support activating or deactivating the BFD resource via the MAC CE signaling.

22. The method according to any one of claims 1 to 3, wherein determining the initial activation state of the BFD resource comprises:
determining at least one of the initial activation state or the activation state update mode of the BFD resource based on a protocol agreement.

23. The method according to any one of claims 1 to 22, further comprising:
updating an activation state of the BFD resource based on the MAC CE signaling sent by the network device.

24. An information determination method, performed by a network device, comprising:
sending a configuration resource to a terminal device, wherein the configuration resource comprises at least one BFD resource; and
determining at least one of an initial activation state or an activation state update mode of the BFD resource.

25. The method according to claim 24, wherein the configuration resource comprises at least one BFD resource set, and the BFD resource set comprises at least one BFD resource.

26. The method according to claim 25, wherein sending the configuration resource to the terminal device comprises:
sending the configuration resource to the terminal device via a first signaling.

27. The method according to any one of claims 24 to 26, wherein determining the initial activation state of the BFD resource comprises:
determining the initial activation state based on a number of BFD resources comprised in a BFD resource set.

28. The method according to any one of claims 24 to 26, further comprising:
sending first indication information to the terminal device via a second signaling, wherein the first indication information is used to indicate the initial activation state of the BFD resource; wherein the first signaling and the second signaling are the same signaling or different signalings.

29. The method according to claim 28, wherein a resource granularity indicated by the first indication information is one of:
all BFD resource sets;
a BFD resource group, wherein the BFD resource group comprises at least one BFD resource set;
a BFD resource set; or
a BFD resource.

30. The method according to any one of claims 24 to 26, further comprising:
sending second indication information to the terminal device via a third signaling, wherein the second indication information is used to indicate whether to update an activation state via an MAC CE signaling; wherein the first signaling and the third signaling are the same signaling or different signalings.

31. The method according to claim 30, wherein a resource granularity indicated by the second indication information is one of:
all BFD resource sets;
a BFD resource group, wherein the BFD resource group comprises at least one BFD resource set;
a BFD resource set; or
a BFD resource.

32. The method according to claim 24, further comprising:
determining whether the terminal device supports activating or deactivating the BFD resource via an MAC CE signaling based on a reporting of the terminal device.

33. The method according to claim 32, wherein determining the initial activation state of the BFD resource based on whether the terminal device supports the activating or deactivating the BFD resource via the MAC CE signaling comprises:
determining the initial activation state of the BFD resource based on whether the terminal device supports the activating or deactivating the BFD resource via the MAC CE signaling and whether the terminal device supports a configuration of a BFD resource set reported by the terminal device.

34. The method according to claim 32, wherein determining the initial activation state of the BFD resource based on whether the terminal device supports the activating or deactivating the BFD resource via the MAC CE signaling comprises:
determining the initial activation state of the BFD resource based on whether the terminal device supports the activating or deactivating the BFD resource via the MAC CE signaling reported by the terminal device and a number of configured BFD resource sets supported.

35. The method according to claim 32, wherein determining the initial activation state of the BFD resource based on whether the terminal device supports the activating or deactivating the BFD resource via the MAC CE signaling comprises:
determining the initial activation state based on a number of BFD resources comprised in a BFD resource set in response to the terminal device reporting that the terminal device supports the activating or deactivating the BFD resource via the MAC CE signaling and supports a configuration of the BFD resource set.

36. The method according to claim 32, wherein determining the initial activation state of the BFD resource based on whether the terminal device supports the activating or deactivating the BFD resource via the MAC CE signaling comprises:
determining the initial activation state based on a number of BFD resources comprised in a BFD resource set in response to the terminal device reporting that the terminal device supports the activating or deactivating the BFD resource via the MAC CE signaling and a number of configured BFD resource sets supported is greater than a first preset threshold value.

37. The method according to claim 32, wherein determining the initial activation state of the BFD resource based on whether the terminal device supports the activating or deactivating the BFD resource via the MAC CE signaling comprises:
determining the initial activation state based on a number of configured BFD resource sets in response to the terminal device reporting that the terminal device supports the activating or deactivating the BFD resource via the MAC CE signaling and supports a configuration of the BFD resource set.

38. The method according to claim 32, wherein determining the initial activation state of the BFD resource based on whether the terminal device supports the activating or deactivating the BFD resource via the MAC CE signaling comprises:
determining the initial activation state of the BFD resource to be deactivated in response to the terminal device reporting that the terminal device supports the activating or deactivating the BFD resource via the MAC CE signaling.

39. The method according to claim 32, wherein determining the initial activation state of the BFD resource based on whether the terminal device supports the activating or deactivating the BFD resource via the MAC CE signaling comprises:
determining the initial activation state of the BFD resource to be activated in response to the terminal device reporting that the terminal device does not support the activating or deactivating the BFD resource via the MAC CE signaling.

40. The method according to claim 32, wherein determining the initial activation state of the BFD resource based on whether the terminal device supports the activating or deactivating the BFD resource via the MAC CE signaling comprises:
determining the initial activation state based on a number of BFD resources comprised in a BFD resource set in response to the terminal device reporting that the terminal device supports the activating or deactivating the BFD resource via the MAC CE signaling.

41. The method according to claim 32, wherein determining the initial activation state of the BFD resource based on whether the terminal device supports the activating or deactivating the BFD resource via the MAC CE signaling comprises:
determining the initial activation state based on a number of configured BFD resource sets in response to the terminal device reporting that the terminal device supports the activating or deactivating the BFD resource via the MAC CE signaling.

42. The method according to claim 37 or 41, wherein determining the initial activation state based on the number of configured BFD resource sets comprises:
determining the initial activation state of the BFD resource comprised in the BFD resource set to be activated in response to the number of configured BFD resource sets being less than or equal to a first preset threshold value; otherwise, determining the initial activation state of the BFD resource comprised in the BFD resource set to be deactivated.

43. The method according to claim 27 or 35 or 36 or 41 or 42, wherein a process for determining the initial activation state based on the number of BFD resources comprised in the BFD resource set comprises one of:
determining an initial activation state of all BFD resources to be activated in response to a number of BFD resources comprised in any BFD resource set being less than or equal to a second preset threshold value; otherwise, determining an initial activation state of all BFD resources to be deactivated;
determining an initial activation state of all BFD resources to be activated in response to a number of BFD resources comprised in each BFD resource set being less than or equal to a second preset threshold value; otherwise, determining an initial activation state of all BFD resources to be deactivated;
determining an initial activation state of the BFD resource comprised in a corresponding BFD resource set to be activated in response to the number of BFD resources comprised in the corresponding BFD resource set being less than or equal to a second preset threshold value; otherwise, determining an initial activation state of the BFD resource comprised in a corresponding BFD resource set to be deactivated in response to the number of BFD resources comprised in the corresponding BFD resource set being greater than a second preset threshold value; or
determining an initial activation state of all BFD resources to be activated in response to a total number of BFD resources being less than or equal to a second preset threshold value; otherwise, determining an initial activation state of all BFD resources to be deactivated.

44. The method according to any one of claims 24 to 26, wherein determining the initial activation state of the BFD resource comprises:
determining at least one of the initial activation state or the activation state update mode of the BFD resource based on a protocol agreement.

45. The method according to any one of claims 24 to 44, further comprising:
sending the MAC CE signaling to the terminal device to update an activation state of the BFD resource.

46. A communication apparatus, comprising:
a transceiving module configured to obtain a configuration resource sent by a network device, wherein the configuration resource comprises at least one BFD resource set, and the BFD resource set comprises at least one BFD resource; and
a processing module configured to determine at least one of an initial activation state or an activation state update mode of the BFD resource.

47. A communication apparatus, comprising:
a transceiving module configured to send a configuration resource to a terminal device, wherein the configuration resource comprises at least one BFD resource set, and the BFD resource set comprises at least one BFD resource;
a processing module configured to determine at least one of an initial activation state or an activation state update mode of the BFD resource.

48. A communication device, comprising:
a processor; and
a memory having stored therein a computer program that, when executed by the processor, causes the device to perform the method according to any one of claims 1 to 23 or any one of claims 24 to 45.

49. A communication device, comprising: a processor and an interface circuit, wherein the interface circuit is configured to receive code instructions and transmit the code instructions to the processor; and
the processor is configured to run the code instructions to implement the method according to any one of claims 1 to 23 or any one of claims 24 to 45.

50. A computer-readable storage medium having stored therein instructions that, when executed, cause the method according to any one of claims 1 to 23 or any one of claims 24 to 45 to be implemented.
